# NEW EUROPEAN PATENT SPECIFICATION

(11) **EP 2 110 021 B2**
(45) Date of publication and mention of the opposition decision: **27.12.2017**
(45) Mention of the grant of the patent: 17.12.2014
(21) Application number: 08710796.7
(22) Date of filing: 05.02.2008
(51) Int. Cl.: A22C 17/00

(54) **METHOD AND APPARATUS FOR DEBONING PICNIC OR THIGH PART**
VERFAHREN UND VORRICHTUNG ZUR ENTBEINUNG EINES PICKNICK- ODER OBERSCHENKELTEILS
PROCÉDÉ ET APPAREIL POUR LE DÉSOSSEMENT D'UNE PARTIE D'ÉPAULE PICNIC OU DE CUISSE

(30) Priority: 06.02.2007 JP 2007026320; 02.05.2007 WO PCT/JP2007/059798
(43) Date of publication of application: 21.10.2009
(73) Proprietor: Mayekawa Mfg. Co., Ltd., Koto-ku Tokyo 135-8482 (JP)
(72) Inventor: UMINO, Tatsuya, Tokyo 135-8482 (JP); KOZU, Shozo, Tokyo 135-8482 (JP); USUI, Hiroyuki, Tokyo 135-8482 (JP); GOTO, Osamu, Tokyo 135-8482 (JP); UYAMA, Tomohiro, Tokyo 135-8482 (JP)
(74) Representative: advotec.
(86) International application number: PCT/JP2008/051864
(87) International publication number: WO 2008/096754

(56) References cited:
- EP-A1- 1 591 015
- EP-A2- 0 587 253
- EP-A2- 0 898 894
- WO-A1-91/04670
- WO-A1-2006/064521
- WO-A2-00/59311
- AU-B2- 618 621
- GB-A- 2 427 121
- JP-A- 06 189 670
- JP-A- 07 506 728
- JP-A- 2000 075 914
- JP-A- 2000 106 818
- JP-A- 2001 149 001
- JP-A- 2002 010 732
- JP-A- 2002 010 732
- JP-A- 2004 236 577
- US-A- 5 405 290
- US-A1- 2006 194 532
- US-A1- 2006 194 532
- US-B2- 7 285 040

## Description

### Technical field

This invention relates to a method and apparatus for automating de-boning of an arm or 1eg part of a slaughtered domestic animal, an apparatus for implementing the method, and a program for configuring the apparatus to perform cutting operation, with which automation level of de-boning is increased, productivity is improved and de-boning process is simplified as compared with conventional methods and apparatuses.

### Description of the related art

The inventors of this application proposed a semiautomated pig leg part de-boning apparatus and method of de-boning pig leg part using the apparatus in Japanese Laid-Open Patent Application Publication No. 2000-106818 (patent literature 1). In the deboning apparatus, preprocessing, lowerfemur bone remove processing, and femur bone remove processing are carried out while the ankle part of a pig leg is held by a clamper attached to a transfer chain and transferred in a hanged state through each station.

All processing is performed with the work (object to be processed) is hanged from a clamper and stabilized in order to minimize influence of the work's own weight, and operation on a cutting board is eliminated in order to prevent microbes from adhering to the work to perform sanitary de-boning operation. Manual operation is limited to preprocessing operation, and labor-saving and increased-efficiency de-boning operation was realized.

In the preprocessing step, the hipbone and tail-bone are removed and incision is made to meat along the lower femur bones (tibia and fibula) and femur bone by a worker while the work is transferred hanging from the clamper. In the succeeding automated step, the pig leg part (work) hanging from the clamper is made incision around the lower thigh and thigh with a cutter while scraping off the meat adhering to the bones with a meat scraper. By this, organic tissue such as meat, tendon, and ligament adhering to the bones is cut, and meat is separated from the bones step by step. These incisions are made at determined positions in longitudinal direction of the bones by rotating the work.

Document EP 0 898 894 A2 further discloses a semi-automatic pig thigt deboner and deboning process using the respective device. The document teaches an incision making process performed by a worker while the leg is transferred in a state hanging from a clamping device. Also a positioning process is disclosed, during which a scraper below the clamping device into which the leg is allowed to be introduced. Further a meat scrapping process is mentioned, which performed by scraper after the incision making and the positioning processes. [Patent Literature 1] JPA2000-106818

### Disclosure of the Invention

### Problems to be solved by the Invention

However, in the de-boning apparatus disclosed in the prior art. incision is made manually to the lower femur bone and femur bone, and automation level is not so high. When making incision along the lower femur bone and femur bone in longitudinal direction thereof, it is necessary to manipulate the cutter not to bite into the surfaces of the bones, whereas bone profiles are complicated 3-dimentionally having bending and twisted parts, so it has been difficult to automate incision making along the profiles of bones while keeping depth of incision appropriately.

With the apparatus disclosed in said patent literature 1, meatscraping process isdivided into a plurality of meat scraping steps, a short length of meat scraping along the bone is performed by a meat scraper at each of the steps in order to evade clogging at the pinching part of the meat scraper plate. Therefore, the work to be de-boned must be pinched by a meat scraper every time the work is processed at each step, and a number of sets of combination of a meat scraper, cutter, and work lifting device must be provided. Accordingly, the apparatus becomes large scaled and it takes long time to de-bone the work, for the de-boning is done in many steps.

The present invention was made on light of problems mentioned above, and aims to provide a method and apparatus for de-boning an arm or leg part of a slaughtered domestic animal with which incision making necessary in de-boning operation of the arm or leg part and performed manually in the past, is automated, and automation level of de-boning operation is increased, thereby increasing operation efficiency, at the same time, in improving yield of meat resulting in improved productivity.

### Means for solving the problems

To attain the object, the present invention proposes a method according to claim 1.

To attain the object, the present invention proposes a method according to claim 1.

According to the method of the invention, incision is made to a part of a domestic animal (hereafter referred to as a work) in a state the work is hanged from the clamping device, then a part of the ankle right under the clamping device is introduced into the concave portion of the scraper plate so that the scraper plate is on the meat part of the work. In this state, when the clamping device is transferred in direction departing from the scraper plate, the work is pulled by the clamping device and the work slants, and force exerts on the meat part of the work slanting downwardly toward upstream of the transfer direction from the scraper plate in a state the meat part is held down by the scraper plate which is fixed at position.

According to the method of the invention, incision is made to an leg part of a domestic animal (hereafter referred to as a work) in a state the work is hanged from the clamping device, then a part of the ankle right under the clamping device is introduced into the concave portion of the scraper plate so that the scraper plate is on the meat part of the work. In this state, when the clamping device is transferred in direction departing from the scraper plate, the work is pulled by the clamping device and the work slants, and force exerts on the meat part of the work slanting downwardly toward upstream of the transfer direction from the scraper plate in a state the meat part is held down by the scraper plate which is fixed at position.

As the ankle of the work is pulled with the meat part held by the scraper plate, force due to the weigh of the work exerts on the bottom of the concave portion opening toward the direction opposite to the transfer direction because of slanting work. Therefore, the work is pressed to the bottom of the concave portion and meat scraping effect by the edge of the concave portion is increased.

With conventional automatic de-boning apparatus disclosed in the patent literature 1, as a work to be de-boned is pulled up vertically with its ankle clamped, scraped meat gets entangled with the bone and clogging occurs.

With the method of the invention, the scraper plate is disposed to slant and the work slants such that its lower part is backward in relation of the transfer direction. Therefore, the work leans to one side under the scraper plate, and scraped meat apt to turn toward the opposite side and does not move to be clogged in the concave portion. Accordingly, meat scraping can be carried out along all through the bone by one scraping operation, so it is not necessary to divide meat scraping process into a number of scraping processes which require a number of scrapers as has been the case conventionally As a result, meat scraping process is dramatically simplified, processing capacity is increased, and processing time is shortened.

Further, as the work is pulled in the direction sameasthetransferdirection, meat scraping can be performed while transferring the work. Like this, it is not needed to move the work to other than the transfer direction, the meat scraping of the method is increased in efficiency.

Further, by making at least one incision around the bone to separate biological tissue adhering to the surface ofthe bone in process of the meatscraping, meat scraping can be performed smoothly with improved yield of meat.

When applying the method of the invention to de-boning a pig leg part with its hipbone removed, a method of de-boning is suitable which includes:
an incision making process for making incision to meat part ofthe pig leg along the lower femur bones and femur bone of the pig leg part in longitudinal direction of the bones while transferring the pig leg part in a state hanged from the clamping device with its ankle clamped with the clamping device,
a first positioning process for positioning the ankle part of the pig leg part transferring with the ankle clamped with the clamping device by allowing a part of the ankle part right under the clamping device to hit a first scraper plate located downstream of the transferring pig leg part so that a inserting protrusion part of the first scraper plate inserts in between a shinbone and fibula composing the lower femur bones, whereby its shank meat is allowed to position right under the first scraper plate and calf meat is held down by a swing scraper plate attached swingable to the scraper plate.
A first meat scraping process for scraping off meat surrounding the lower femur bones by transferring the clamping device in a state that the meat surrounding the lower femur bones is held down by the first main scraper plate and swing scraper plate. whereby the meat receives scraping force slanting downwardly toward upstream of the transfer direction from the first main scraper plate and the swing scraper plate to be scraped off from the lower femur bones as the clamping device is transferred,
a second positioning process to position the pig leg with meat scraped from the lower femur bone remaining by transferring the pig leg part in a state hanged from the clamping device and allowing the knee joint between of the pig leg part to intrude into a concave portion of a second scraper plate slanted downward toward downstream of the transfer direction, the concave portion being open toward upstream of the transfer direction and shaped such that the knee joint and femur bone can pass through,
a second meat scraping process for scraping off meat surrounding the femur bone by transferring the clamping device in a state the meat is held down by the second scraper plate, whereby the meat receives scraping force slanting downwardly toward up-

A de-boning apparatus having the features of claim 6 for carrying out de-boning according to the method of the invention is provided.

stream of the transfer direction from the second scraper plate to be scrapped off from the femur bone as the clamping device is further transferred, and a final severing process for separating the meat from the femoral head of the femur bone.

With the de-boning method, when scraping meat from the lower femur bones, meat between the shinbone and fibula which compose the lower femur bones can be scraped by the inserting protrusion part, and the swing scraper plate carries out meat scraping along the shinbone increasing in diameter toward the femur bone following the profile of the bone. Therefore, meat surrounding the lower femur bones can be scraped off efficiently and with increase yield of meat.

It is preferable that said inserting protrusion part of the first scraper plate is provided separately from the first scraper plate to be capable of being moved separately as an inserting protrusion plate member, whereby first the inserting protrusion plate member is allowed to be inserted in between the shinbone and fibula to come to contact with the shinbone and a part of meat is scraped from the lower femur bones by the inserting protrusion plate member, then a first scraper plate having no inserting protrusion part is allowed to come to contact with the fibula and remaining meat surrounding the lower femur bones is scraped by transferring the clamping device continuously. Bythis, meat can be scraped from the shinbone and fibula with further increased yield of meat.

It is suitable that the incision making process includes;
a first incision making process to make incision such that the tip of a cutter enters the meat from the upper part of the knee joint part of the pig leg and travels along the surface of the femur bone and the middle part of the cutter travels along a membrane between inner thigh meat and knuckle meat until the end of the femoral head, a second incision making process to make incision from the upper part of the lower femur bones along the lower femur bones until the lower partofthe knee joint and a third incision making process to make incision such that the tip of the cutter enters the calf meat and travels passing by the knee cap until below the joint part.

In this case, it is suitable that the pig leg part is pulled downstream in the meat scraping process with the meat part being held down by the meat scraper plate in a state the knee cap faces toward upstream of the transfer direction.

By making incision like this, meat can be scraped easily from the lower femur bones and femur bone. By cutting the membrane between the inner thigh meat and knuckle meat by the first incision and performing meat scraping by pulling the ankle of the pig leg toward the transfer direction in a state the knee cap is in the upstream side from the femur bones, the work slants such that the lower part thereof is backward in relation of the transfer direction with the ankle ahead, so the weigh of the work exerts on the inner thigh meat part such that the inner thigh meat is pressed against the undersurface ofthe scraper plate, scraped inn er thigh meat moves to turn toward outer thigh meat, and clogging of meat to the concave portion of the scraper plate does not occur. Therefore, meat ca be scraped from the femur bone by stroke of scraping operation.

If whether the pig leg part is a right thigh or left thigh part can be discriminated and length thereof can be detected in a hanged state, it is no problem to hang the pig leg part at random, irrelevant to right or left thigh and its length. Therefore selection of scraper plate and adjusting of scraping stroke length in the meat scraping from the lower femur bones and adjusting of scraping stroke length and positions of cutting around the femur bone in the meat scraping from the femur bone in accordance with right or left and length of the pig leg part to be processed, become possible. This discrimination and detection can be performed by a method in which the pig leg part is clamped with the clamping device and hanged from it such that the fat layer of the pig leg part is directed always toward a determined direction, a plate swingable on a swing axis is moved up from below the hanging pig leg part until the plate comes to contact with the femoral head ofthe pig leg part sothat the swing axis is on a center line ofthe hanged pig leg, whereby whether the pig leg is a right leg or left leg is detected by detecting direction of dip of the plate upon contacting the femoral head; and lifted distance ofthe plate when the plate contacts the femoral head is detected and length ofthe pig leg part is calculated based on lifted distance detected.

It is possible to manipulate the cutter for making incision to move along a trajectory the most appropriately in accordance with right or left and length of the pig leg part to be processed, by providing a plurality of programs in each of which movement of a cutter for making incision is set beforehand to correspond with right or left and length ofthe pig leg part, selecting a program which corresponds the most appropriately with a pig leg part to be processed from among the plural programs based on the result of detection of right or left and length of the pig leg part, and manipulating the cutter under the selected program.

A de-boning apparatus having the features of claim 6 for carrying out de-boning according to the method of the invention is provided.

In the apparatus of the invention, after incision is made by incision making devices to meat surrounding the bones along the bonesin longitudinal direction thereof, the leg of the work is introduced into the concave portion ofthe scraper plate. Then, the ankle clamped with the clamping device pulled in the transfer direction ofthe clamping device, whereas the meat part of the work is held by the fixed scraper plate. Therefore, the meat part of the work is receives force from the undersurface ofthe scraper plate and the work slants such that the lower part thereof is backward and the ankle is ahead. So, the ankle part intruding in the concave portion ofthe scraper plate just under the clamping device is pushed strongly due to weigh of the work, and effect of meat scraping with the edge ofthe concave portion is increased.

As the slanted work leans to one side under the scraper plate, and scraped meat apt to turn toward the opposite side and does not move to be clogged in the concave portion. Accardingly, meat scraping can be carried out along all through the bone by one scraping operation, so it is not necessary to divide meat scraping process into a number of scraping processes which require a number of scrapers as has been the case conventionally As a result, meat scraping process is dramatically simplified, processing capacity is increased, and processing time is shortened.

With automatic de-boning apparatuses, it is required to provide a number of sets of combination of a meat scraper, cutter, and work lifting device. According to the apparatus of the invention, meat scraping can be carried out by providing only one set of combination of a meat scraper and cutter, and a work transfer device. Therefore, substantial cost reduction and space-saving are attained.

Further, as the work is puled in the direction same as the transfer direction, meat scraping can be performed while transferring the work. Like this, it is not needed to move the work to other than the transfer direction, the meat scraping of the method is increased in efficiency

It is preferable that the clamping device is transferred by the transfer device hinged swingable along the transfer route. BY this, the clamping device can slant freely corresponding with the slanting of the work, particularly slanting of the lower femur bones, and the work can be pulled with the ankle being clamped securely with the clamping device.

It is preferable that a chucking device capable of closing the opening of the concave portion ofthe scraper plate is provided to the scraper plate. By this, the work intruded into the concave portion of the scraper plate is prevented from being disengaged from the concave portion, and meat scraping operation can be carried out stably. As the work does not slip out of the concave portion even if force exerts backward on the work, effect of scraping meat is increased.

When applying the apparatus of the invention to de-boning a pig leg part with its hipbone removed, an apparatus is suitable which comprises:
a transfer means for transferring clamping devices each of which clamps the pig leg part with its ankle to hang it,
a plurality of incision making means for making incision to meat part of the pig leg part along its lower femur bones and femur bone in longitudinal direction;
a first meat scraping means for scraping meat surrounding the lower femur bones as the pig leg part is transferred, comprising:
   an inserting protrusion part which enters the gap between a shinbone and fibula composing the lower femur bones when the transferring pig leg part hits the inserting protrusion part,
   a first scraper plate which is located downstream of the transferred pig leg part and holds down the shank meat when the pig leg part comes under the first scraper plate, and
   a swing scraper plate which holds down the calf meat when the pig leg part comes under these scraper plates;
   a second meat scraping means for scraping meat surrounding the femur bone as the pig leg part is further transferred, comprising:
      a second scraper plate which is located downstream of the transferred pig leg part of which the meat surrounding the lower femur bones is scraped off by the first scraping means, the second scraper plate slanting downwardly toward downstream of the transfer direction and having a concave portion which is open toward upstream of the transfer direction and being shaped such that the knee joint and femur bone can pass through the concave portion, and
      a cutter device which cuts biological tissues around the femur bone in process of scraping down the thigh meat from the femur bone and cuts off the meat from the femoral head at the end of the meat scraping;
      whereby the meat surrounding the lower femur bones is scraped off by transferring the clamping device to allow the meat to receive scraping force slanting downwardly toward upstream of the transfer direction from the first scraper plate, the meat surrounding the femur bone is scraped off by further transferring the clamping device to allow the meat to receive scraping force slanting downwardly toward upstream of the transfer direction from the second scraper plate, and the meat scraped off from the lower femur bones and femur bone is cut off from the femoral head by the cutter.

By the apparatus composed like this, meat scraping from the lower femur bones and femur bone of a pig leg part can be carried out efficiently and with increased yield of meat.

In the invention, by providing
a first incision making means for making incision such that the tip of a cutter enters the meat from the upper part of the knee joint part of the pig leg and travels along the surface of the femur bone and the middle part of the cutter travels along a membrane between inner thigh meat and knuckle meat until the femoral head side end of the femur bone,
a second incision making means for making incision from the upper part of the lower femur bones along the lower femur bones until the lower part of the knee joint; and a third incision making means for making incision such that the tip of the cutter enters the calf meat and travels passing by the knee cap until below the joint part, meat scraping in the succeeding process can be performed smoothly and with increased yield of meat.

In the invention, by providing a discrimination means for discriminating whether the pig leg part is a right leg or left leg and at the same time detecting length of the pig leg part upstream of the incision making means, the discrimination means having a plate which is swingable on a swing axis and swings when it comes to contact with the femoral head of the pig leg part hanging from the clamping device, whereby the plate is moved up toward the pig leg part from below until the plate comes to contact with the femoral head such that the swing axis moves on the vertical center line of the hanged pig leg part, discrimination of right or left of the pig leg part Is done by detecting direction of dip of the plate upon contacting the femoral head, and length of the pig leg part is detected by detecting lifted distance of the plate when the plate contacts the femoral head and calculating the length of the pig leg part based on the detected distance, discrimination of right or left of the pig leg part and detection of length thereof can be done with a simple device. By this, selection of scraper plate and adjusting of scraping stroke length in the meat scraping from the lower femur bones and adjusting of scraping stroke length and positions of cutting around the femur bone in the meat scraping from the femur bone in accordance with right or left and length of the pig leg part to be processed, become possible.

Another discrimination means for discriminating whether the pig leg part is a right leg or left leg may be provided upstream of the incision making means, the discrimination means comprising:
two pair of measuring arms each of which being provided ata position capable of pinching the thigh meat of the pig leg part hanging with its ankle clamped with a clamping device so that the fat layer thereof is always faces to a determined direction,
a measuring arm drive means provided for each of the pairs of the measurement arms to move the arms to vary distance between the arms of each of the pairs of the measuring arms, and
a judging means forjudging whether the pig leg part is a right leg or left leg part;
whereby the judging means detects distance between the arms of each pair of the measuring arms, compares the detected distances, and judges whether the pig leg part is a right or left leg part from the result of the comparison.

The thigh meat part of the pig leg part with the hipbone removed is different in thickness between the right and left of the thigh meat part. This discrimination means utilizes this fact for discriminating right or left of the pig leg part. With the construction, the thigh meat part is pinched by the two pair of measuring arms, so the discrimination can be done with accuracy even if the pig leg part singe a little, for the swinging is restricted by pinching the thigh meat part by the measuring arms. Further, discrimination device is simple in construction and complicated control device in not required.

Another length detecting means for detecting length of the pig leg part may be provided upstream of the incision making means, the length detecting means comprising:
a base bracket which is moved up from below the transferring pig leg part clamped with its ankle clamped with the clamping device and hanged so that the fat layer thereof is always faces to a determined direction advanced toward the pig leg part while being transferred at the same speed and in the same direction as those of the clamping device, a detecting arm supported swingable by the base bracket so that the detecting arm swings downward upon contacting the femoral head of the pig leg part, a proximity switch for detecting proximity or contact of the detecting arm to the proximity switch, and
a pusher arm which is supported swingably above the detecting arm by the base bracket and extends towar the pig leg part, and contacts the lower part of the thigh meat of the pig leg part first to push away the thigh meat when the base bracket approach the thigh meat and swing downward receiving reaction force from the thigh meat,
whereby lifted distance of the base bracketwhen the detecting arm comes close to or contacts the proximity switch is detected and length of the pig leg part is calculated based on the detected distance.

With this construction, the detecting arm can be brought to contact with the femoral head without fail by the provision of the pusher arm. Without the pusher arm, it may happen that the detecting arm interferes with lower part of the thigh meat and can not contact the femoral head. With the construction, as the pusher arm is extending above the detecting arm toward the thigh meat part, the pusher arm hits at somewhere of the thigh meat part when the base bracket is advanced and raised toward the pig leg part and push away the thigh meat part. Therefore, some distance is maintained between the detecting arm and the lower partof the thigh meat, and the detecting arm does not interfere with the thigh meat part. The pusher arm turns downward while pushing the thigh meat as the base bracket advances and rises toward the pig leg part receiving reaction force from the thigh meat part, and the detecting arm can come close to and contact the femoral head.

By composing the incision making means such that it comprises a plurality of programs in each of which movement of a cutter for making incision is set beforehand to correspond with right or left and length of the pig leg part, a selecting means for selecting a program which corresponds the most appropriately with a pig leg part to be processed from among the plural programs based on the result of detection of right or left and length of the pig leg part, and a cutter drive means for manipulating the cutter under the selected program, the cutter can be moved in the incision making process to follow a trajectory most appropriate for the kind(right or left leg) and length of the leg part.

It is suitable to provide in order to stabilize the pig leg part during incision making process;
a transfer means for transferring a plurality of backside stabilizers starting from the incision making means through the first meat scraping means to the second meat scraping means separately from the clamping device transferring means, the backside stabilizers being attached to the transfer means at the same spacing as the clamping devices and transferred at the same speed as the clamping devices to support the backside of the transferring pig leg part at its central portion, and
a guide bar located in a region where incision is made by the first to third incision making means such that the guide bar extends parallel to the transfer route and contacts a part of the thigh meat of the pig leg part where the hipbone is removed to support the transferring pig leg part.

Further, by providing a first meat scraping means for a right leg part and that for a left leg part are located to face each other with the clamping device transfer route passing between both of the scraper means, a second meat scraping means for a right leg part and that for a left leg part are located to face each other with the clamping device transfer route passing between both of the scraper means, and a judging means for judging whether the first and second meat scraping means are to be used or those for left leg part are to be used, scraper plates can be selected to match the right or left of the pig leg part in the meat scraping from the lower femur bones.

In the invention, it is suitable to compose the de-boning apparatus such that the transfer means is a continuous transferring device for transferring the clamping device hanging the pig leg part at a constant transfer speed passing by a work length detecting means, the incision making means, the first meat scraping means for scraping meat from the lower femur bones, and the second meat scraping means for scraping meat from the femur bones; and
a discrimination means for discriminating whether the pig leg part to be processed is a right leg or left leg part Is provided to perform the discrimination before the pig leg part is clamped with the clamping device, and a work feeding device to feed the pig leg part in a hanged state to the discrimination device where said discrimination is performed and then feed to a work shift guide for guiding the pig leg part from the work feeding device to the transferring clamping device, the work shift guide being provided between the transfer route of the clamping device and the work feeding device and can be moved in the same direction and at the same speed as the clamping device in synchronism with the transfer of the clamping device for a determined interval or section, and a pusher for pushing the pig leg part hanging from the pusherguide to the clamping device is provided. It is important to discriminate exactly whether the pig leg part to be processed is a right leg or left leg. By the discrimination device of this construction, the discrimination is done while maintaining the pig leg part in a stationary state, and discrimination of right or left of the pig leg part can be done exactly without fail. On the other hand, processes other than this discriminating process are performed while the pig leg part is transferred continuously in order to increase processing capacity.

The invention proposes a program for configuring a controller to control cutting operation to make incisions along surfaces of bones of an arm or thigh part including the joint part in the longitudinal direction in an apparatus for de-boning an arm or leg part of a slaughtered domestic animal transferred In a state suspended from a cramp device, wherein
a plurality of the cutter movements are prescribed in accordance with left, right, and size of the arm or leg part of the pig and also a plurality of incision routes are prescribed so thatsaid cutter movements correspond to said incision routes in the controller,
each of said incision routes is specified to be performed by each of said 6-axis multi-joint robot arranged in series in the de-boning device respectively,
a specific movement of said cutter is selected by the controller based on a specific incision route specified to be performed by a specific robot, and a control signal for controlling the movements of the selected cutter is sent to the specified robot, thereby allowing a plurality of said 6-axis multi-joint robots to perform said series of incision making operations.

The program makes a controller to control incision making operation among the de-boning operation. According to the invention, a plurality of 6-axis multi-joint robots with a cutter for making incision are provided, and by making each of the robots to make each specific Incision prescribed in each of the programs and allotted for each robot by means of the controller, speed and accuracy of incision making operation can be increased, yield of meat is increase, and productivity is improved.

It is preferable that; at least three 6-axis multi-joint robots are provided, and said controller is programmed so that an incision route from the upper part of the knee joint part to the lower end of the femur bone is specified to be performed by a first 6-axis multi-joint robot, an incision route from the upper part of the lower femur bone to the lower end of the knee joint without passing through the calf meat is specified to be performed by a second robot, and an Incision route from the upper part of the lower femur bone to the lower end of the knee joint passing through the calf meat is specified to be performed by a third robot.

By assigning a specific incision making route to a specific incision making device, incision making operation of the arm or leg part of a slaughtered domestic animal can be performed with high efficiency and productivity can be improved.

### Effect of Invention

As has been described heretofore, according to the method and apparatus of the invention, the meat part of work is scraped in the meat scraping process by transferring the clamping device in a state the ankle part right under the dam ping device Is intruded into a concave portion of the meat scraper plate so that the work is slanted with the meat part held down by the scraper plate fixed at position, the part of the work intruded into the concave portion of the scraper plate and contacting the bottom of the concave portion receives reaction force from the bottom of the concave portion due to gravitational force of the work acting vertically downward. In this state, the bones of the work clamped with the clamping device is transferred, the meat part is scraped effectively by the edge of the concave portion of the scraper plate effectively.

Further, the work leans to one side under the scraper plate due to the weigh of the work, scraped meat apt to turn toward the opposite side and does not move to be clogged in the concave portion. Accordingly, meat scraping can be carried out along all through the bone by one scraping operation, so it is not necessary to divide meat scraping process into a number of scraping processes which require a number of scrapers as has been the case conventionally As a result, processing time is shortened, processing capacity is increased, and as meat scraping process is finished by one meat scraping operation, the apparatus can be composed compact and provided low in cost.

Further, by providing a plurality of incision making devices (6-axis multi-joint robots with a cutter for makIng incision) and selecting a program prescribing a specific incision line according to left, right, size, and incision making position to control the cutting tool drive device of a specific robot, speed and accuracy of incision making operation can be increased, yield of meat is increase, and productivity is improved.

### Brief Description of the Drawings

FIG 1 is a representation of all processing steps of the first embodiment of the present invention when applied to de-boning a thigh part of a pig.
FIG.2 is a plan view showing overall configuration of the apparatus of the first embodiment
FIGS.3a and 3b are drawings for explaining the first step of the first embodiment for discriminating right or left of the pig leg and detecting length thereof.
FIG4 is an elevation view of the incision making device of the first embodiment
FIG.5 is a plan view of the incision making device of the first embodiment
FIG6 is a front view of the incision making device of the first embodiment.
FIG. 7 is a drawing for explaining movement of the cutter when incision is made in the case of the first embodiment
FIGS.8a, 8b, and 8c are representation showing cutting positions in the second embodiment, FIG.8a is a longitudinal sectional view of a thigh of a slaughtered pig, FIG.8b is a section along line A-A in FIG. 8a, and FIG.8c is a section along line B-B in FIG.8a.
FIG9 is a control block diagram for controlling the cutter mechanism in the first embodiment
FIG.10 Is a plan view showing the work stabilizing means in incision making process in the first embodiment.
FIG 11 is an elevation view showing the work stabilizing means in incision making process in the first embodiment.
FIG 12 is a plan view of the scraper for scraping off meat from the lower femur bones In the first embodiment(a section along line F-F in FIG 13a).
FIGS.13a to 13c are elevation views for explaining process of scraping off meat from lower the femur bones in the first embodiment.
FIGS.14a to 14d are elevation views for explaining process of scraping off meat from the femur bone in the first embodiment
FIG.15 is a section along line G-G In FIG 14a.
FIG.16 is a section along line H-H in FIG.14a.
FIG 17 is a plan view showing overall configuration of the apparatus of the second embodiment of the present invention when applied to de-boning a pig leg part.
FIG 18 is an elevation view for explaining the discriminating device 110 for discriminating right and left of the pig leg in the second embodiment
FIG. 19 is a section along line I-I in FIG 18.
FIG.20 is a drawing for explaining the driving device for driving the discrimination device 110 in the second embodiment.
FIG.21 is a plan view for explaining the work shifting device 120 in the second embodiment.
FIG.22 is an elevation view of the work length detecting means 130 used in the second embodiment showing the state before the work length detecting means is engaged.
FIG.23 is an elevation view of the work length detecting means 130 showing the state the work length detecting means is on the way to engagement.
FIG.24 is an elevation view of the work length detecting means 130 showing the state the work length detecting means is completely engaged.
FIG.25 is a plan view of the work length detecting means 130.
FIG.26 is a plan view of the dorsal stabilizing mechanism 150 in the second embodiment.
FIG.27 is an elevation view of the dorsal stabilizing mechanism 150.
FIG.28 Is a plan view of the lower femur bone removing device in the second embodiment.
FIG.29 is an enlarged plan view of the lower femur bone removing device of FIG.28 in the anterior half-process.
FIG.30 is an enlarged plan view of the lower femur bone removing device of FIG.28 in the posterior half process.

### Detailed description of embodiments

Preferred embodiments of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

### [The first embodiment]

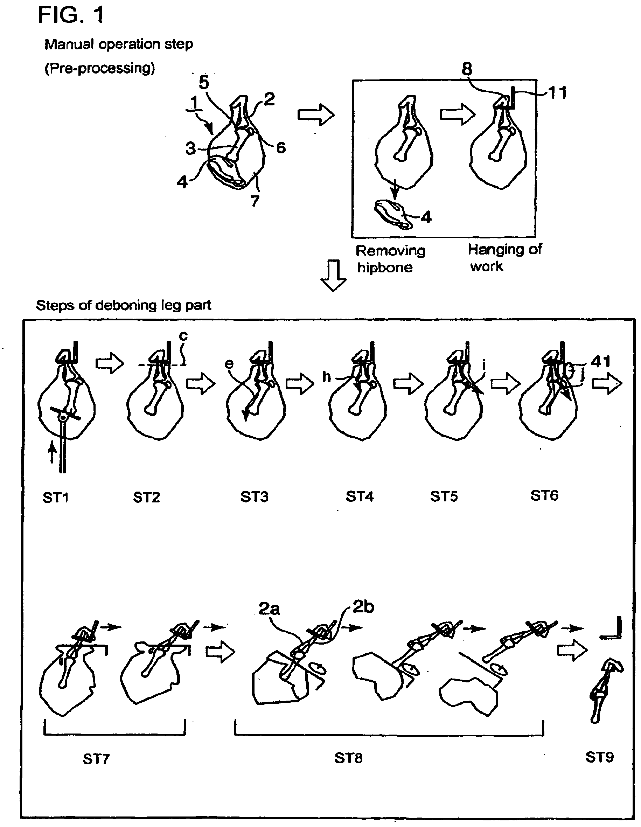

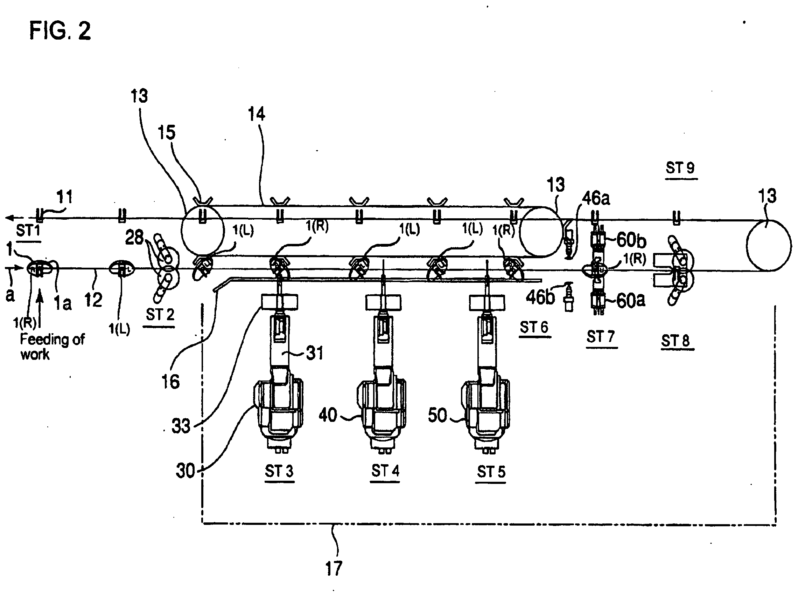

Referring to FIG1 and 2 showing overall steps and configuration of the first embodiment, a pig leg part consists of an ankle, lower femur bones 2, a femur bone 3, a hipbone 4, a knee cap 6 located at the front part of the knee joint part 5, and meat 7 surrounding these bones. First, the hipbone 4 is removed manually in a preprocessing step. Then, the pig leg part 1 got rid of the hipbone is fitted at its ankle 8 by a worker to a clamper 11 which is transferred by a transfer chain 12 shown in FIG2 in horizontal direction at a constant speed without discriminating whether the pig leg part 1 (hereafter referred to as work 1) is a right or left thigh.
The pig leg part 1 is processed automatically at the first step ST1 through the ninth step ST9 as shown in FIG.1 in a state the work 1 is hanged from the clamper 1. The work 1 is hanged in a state its fat layer faces backward(backward means here a direction toward chain wheels 13) from the first step ST1 to the sixth step ST6.

Referring to FIG.2, a plurality of clampers 11 are attached to a transfer chain 12 at an equal spacing and transferred horizontally at a constant transfer speed along a transfer route of the chain in a state the work 1 is hanging from the clamper 11. The transfer chain 12 is looped over a pair of chain wheels 13(one of the wheels is not shown in the drawing) to form a circulation route.

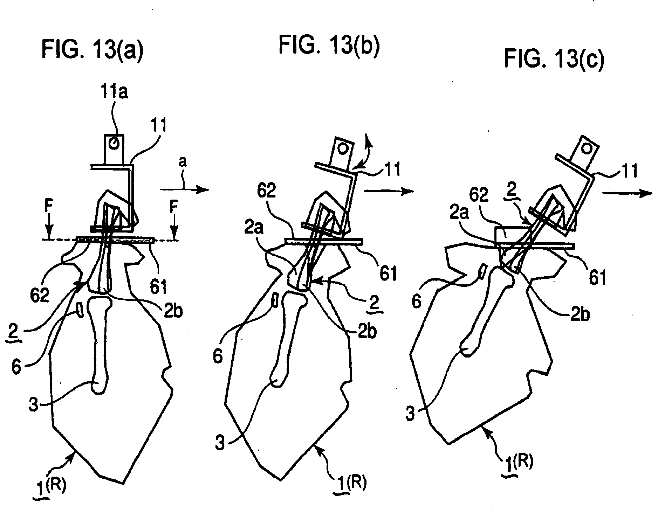

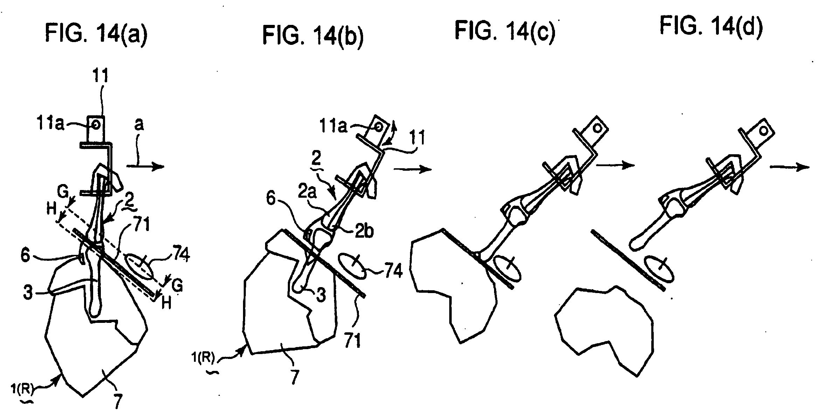

The clamper 11 attached to the chain swingable along the transfer direction and a rotation mechanism for rotating the clamper 11 is provided. The work 1 can be rotated by the rotation mechanism so that the clamper 11 is rotated based on the discrimination result whether the work 1 is right thigh or left thigh discriminated at the first step ST1 as mentioned later. The clamper attached to the chain 12 swingable on a swing axis 11a(see FiGS. 13 and 14) so that it can slant when meat is scraped off from the lower femur bones and the femur bone while transferring the clamper.

In incision making steps of ST3-ST5 are installed three robot arms 30, 40, and 50 each for each of the steps. A transfer chain 14 is looped over a pair of chain wheels 13 located between the beginning side of ST3 and end side of ST5. A plurality of backside stabilizers 15 are attached to the transfer chain 14 at a constant spacing the same to that of the clampers 11. The backside stabilizer 15 serves to support the work 1 hanging from the clamper 1 from the backside. In the incision making steps of ST3∼ST5 is provided along the transfer route of the work 1 a stabilizing guide bar 16 which supports the part of the work 1 where the hipbone is removed from the front side of the work 1. Further, a safety railing 17 is provided to surround processing devices in the steps ST3-ST6.

Therefore, the work 1 is supported by 3-point supporting by the clamper 11, backside stabilizer 15, and stabilizing guide bar 16 in the incision making steps ST3∼ST6 so that incision is made to the work 1 in a state the work 1 does not swing.

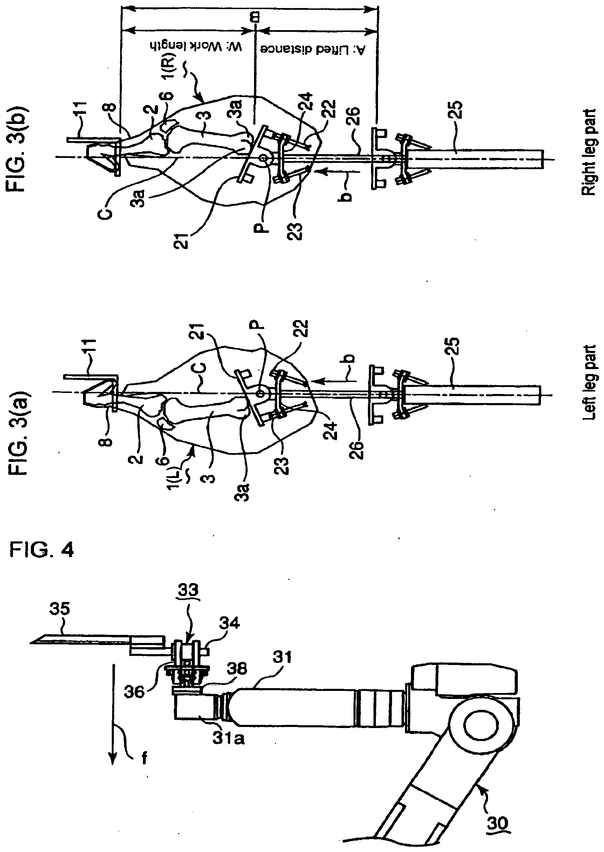

With the construction, the work 1 (a pig leg with the hipbone 4 removed) is transferred by the clamper 11 in a direction shown by an arrow a after it is preprocessed to remove the hipbone. Hereafter, when discriminating the work 1 whether it is a right thigh or left thigh, a right thigh is referred to as work 1l and left thigh as work 1 (L). As shown in FIGS.3a and 3b, when the work 1 hanging from the clamper 11 with its fat layer directed backward in ST 1, the femoral head 3a comes to the right side when the work 1 is a right thigh, and the femoral head 3a comes to the left side when the work 1 is a left thigh. This is utilized for the discrimination of right or left of the pig leg part 1.

In ST1, a lifter plate 24 and a sensing plate 21 supported wingable by the lifter plate 24 are provided below the work 1 so that the swing center P of the sensing plate 21 is on the vertical center line C of the work 1. The lifter plate 24 is connected to a piston rod 26 of an air cylinder 25. A left proximity sensor 23 and right proximity sensor 22 are attached to left end part and right end part of the lifter plate 24 respectively.

With the construction, the sensing plate 21 Is lifted up by the air cylinder 25 from below the femoral head 3a in direction of arrow e. When the sensing plate 21 contacts the femoral head 3a, the sensing plate 21 inclines such that contacted side of the sensing plate 21 moves downward and comes close to the proximity sensor 22 or 23. The proximity sensor 22 or 23 detects direction of inclination of the sensing plate 21. Discrimination of whether the work 1 is a left thigh or right thigh is done according to direction of inclination of the sensor plate 21.

At the same time with the discrimination operation, length of work 1 is obtained by measuring lifted distance A of the sensing plate 21 when it has contacted the femoral head 3a, and subtracting the height A from a distance B which is the distance from the undersurface of the clamper 11 to the sensing plate 21 before it is lifted.

Result of discrimination of right or left of the pig leg part 1 is used for the selection of cutting operation program in which incision trajectory and rotation direction of the clamper are defined so that the cutter Is manipulated under the selected program in the automatic incision making steps ST3 to ST5, for the selection of a cutter used to make incision along side surfaces of bones in ST6, and for the selection of a meat scraper for right leg or left leg in meat scraping from the lower femur bone in ST7.

Further, result of measurement of work length is used for the changing-over of cutting operation program in automatic incision making steps ST3∼ST5, for the estimation of starting point and ending point of cutting along the surface of the bones in ST6, and for the estimation of starting point and ending point of meat scraping along the femur bone in ST7.

The work 1 is transferred to ST2, meat is cut all around the ankle part(a part of the lower femur bones just below the clamper 11 as shown by a line c in FIG.1) with a set of round blade cutters 28 to make meatscraping possible in the post processing.

Then, the work is transferred to ST3, where incision Is made to inner thigh along the femur bone. A cutter mechanism as shown in FIGS.4 to 6 is used for the incision making. The cutter mechanism is composed such that a cutting tool 33 is mounted to a 6-axis vertical multi-joint robot 30 at an end part 31 a of a robot arm 31 of the robot 30. Incision Is made with this tool from the upper part of the knee joint part 5 to the end of the femur bone 3 as shown by line e in FIG.1.

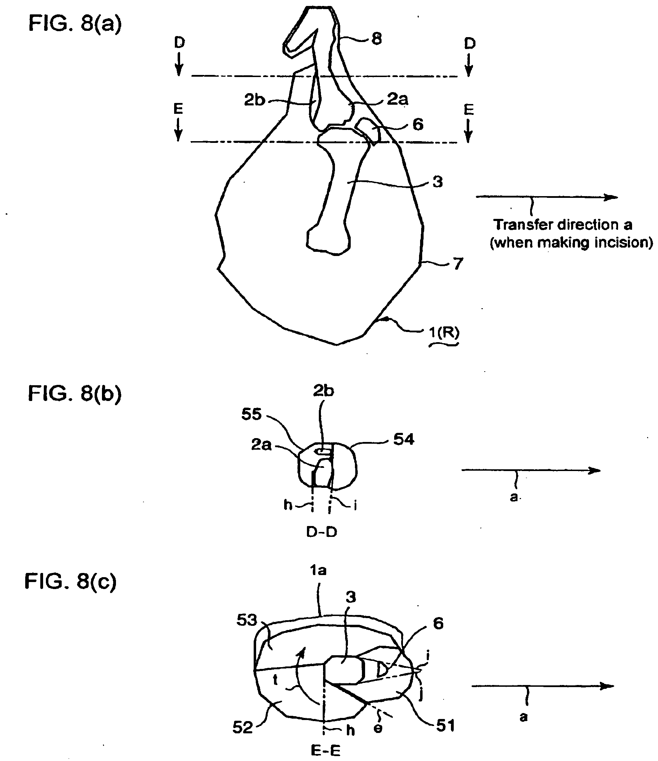

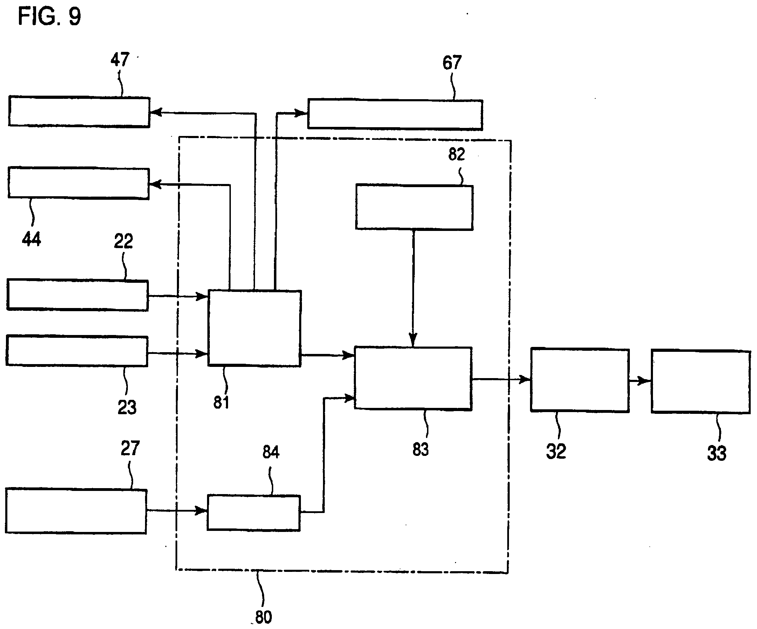

In this incision making process, the cutting tool 33 is manipulated so that the leading end of a cutter reaches the surface of the femur bone and then runs along the surface, while the middle part of the cutter runs along the membrane between the inner thigh meat 52 and a knuckle meat part 51 (shintama in Japanese) as shown by a line e in FIG.8I. If the cutter cuts into meat too deep from the surface of the thigh meat, the meat is damaged. Control of movement of the cutting tool to make incision in the succeeding incision making along incision lines including the line e is performed by a controller 80 shown in FIG.9. In FIG9, six cutting operation programs 82 are provided to comply with a right or left of the leg part, large, middle, or small in length of the leg part.

Referring to FIG9, whether the pig leg part to be de-boned is a right leg or left leg is detected by a right/left leg discrimination means 81 based on an inputted signal from the sensors 22, 23. Lifted distance A detected by a lift height detecting means 27 is inputted to a computing means 104, and the computing means 84 calculates work length W by subtracting the detected distance A from a distance B between the under surface of the clamper 11 and the position of the sensor plate before is lifted up. A cutting operation program which can correspond most appropriately with the work 1 to be de-boned is selected from among the plural programs 82 by a selecting means 83. A cutter tool 33 is operated under the selected program by means of a cutting tool drive device 32 mounted to the robot 30. In this way, incision making is performed in three steps in ST3-5.

As shown in FIGS.4 to 6, the cutting tool 33 comprises a base member 36, a swing shaft 34 supported □wingable by the base member, and a knife-shaped cutter 35 which is attached to the swing shaft 34 to be offset in the direction opposite to the cutter travel direction f The cutter 35 has a sharp edged V-shaped cutting edge so that cutting by both sides of the cutter is possible, that means that both sides of the cutter can be permitted to contact the bone when traveling along the surface of the bone without biting into the bone.

By positioning the swing shaft 34, by which cutting angle g1 is adjusted, nearer to the robot arm 31 than the cutter 35, the point of application force to drive the cutter is advanced toward cutter travel direction f than the actual contact position of the cutter 35 to the bone and meat, so the cutter 35 can be moved along the surface of the bone.

The swing shaft supporter 36 for supporting the swing shaft43 to which the cutter 35 is attached is slidable by means of a mechanism 37 in directions perpendicular to the robot arm 31 and travel direction f of the cutter 35. The slide mechanism 37 comprises a base plate 38 fixed to the robotarm 31 at its end part 31 a to extend in direction perpendicular to the robot arm 31 and travel direction f of the cutter 35, a linear guide rail 39 mounted on the base plate 38 along its longitudinal direction, and a linear guide bar 41 supported by the base member 38 above the linear guide rail 39. The linear guide bar 41 penetrates the swing shaft supporter 36 to guide it. Coil springs 42 are provided to both sides of the swing shaft supporter to surround the linear guide 41. The swing shaft supporter 36 is positioned at the central part of the linear guide bar urged by the springs from both sides when any force does not exerts to slide the swing shaft supporter 36.

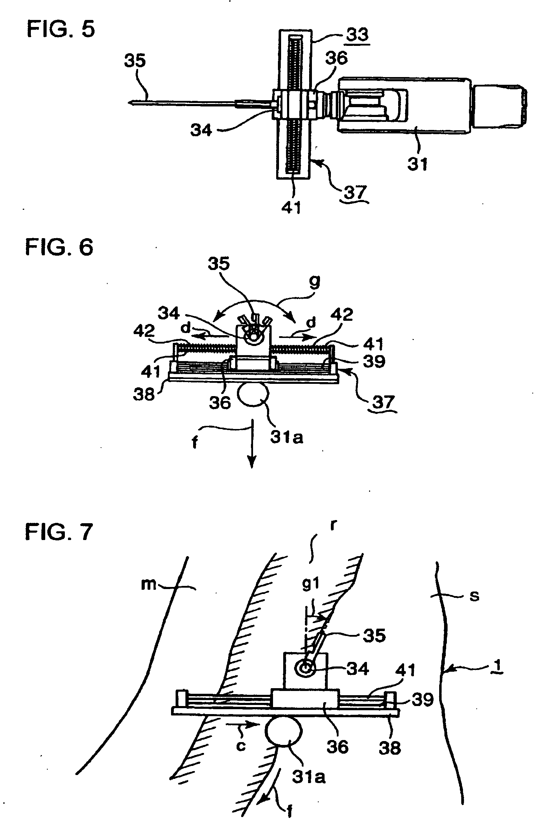

In this way, the cutter 35 is slidable in directions perpendicular to the robot arm 31 and travel direction f of the cutter 35 as shown by arrows d in FIG6 and Dwing-able about the swing shaft 43 perpendicular to the slide direction of the swing shaft supporter 34 so that cutting angle g1 is adjustable by the swing of the cutter. Therefore, the cutter 35 can follow the bones in the meat flexibly changing its attitude according to the profile, thickness, and length of the bones.

As described above, six cutting operation programs for defining cutter movement trajectory are prepared to deal with the right or left of the leg part 1 and length of the leg part(large, middle, or small), and a most appropriate program is selected automatically in the controller 80 based on the result of discrimination and measurement of work length in ST1. Errors inevitably occur between the cutter movement trajectory defined in the selected program and actual profiles of the bones due to individual difference of the work 1. Adjustment for compensating for the errors can be by the cutter tool 33 which has two-degree-of-freedom consisting of adjusting of position of the cutter 35 by means of the slide mechanism 37 and adjustment of cutting angle g1 of the cutter 35 by allowing the cutter 35 to swing about the swing shaft 34.

Cutting operation of the cutter 35 will be explained with reference to FIG.7. A position of the cutter 35 when it contacts the surface of the bone r of the work 1 is set as an initial position of the cutter 35 in the cutting operation program, so the cutter 35 is inserted into the meat until it contacts the bone r as shown in FIG.7.

When there is an error between the initial position of the bone set in the program and actual position of the bone due to difference in size of individual work 1, the error is compensated by the sliding of the swing shaft supporter 36 in the right or left direction on the linear guide rail 39 pushed by reaction force from the bone.

When the end part 31a of the robot arm 31 moves from this initial position along the surface of the bone r in cutter travel direction f under the cutting operation program, the cutter 35 receives reaction force from the surface of the bone and swings on the center axis of the swing arm 34, and the cutting angle of the cutter 35 is adjusted to g1 so that the cutter 35 directs along the surface of the bone r while moving along the surface of the bone r.

In this way, the cutter 35 can swing on the center axis of the swing shaft 34, which is positioned nearer to the end part 31 a of the robot arm 31 than the cutter 35, by reaction force exerting to the cutter 35 from the bone r, while moving along the surface of the bone with the error due to individual difference of the work 1 being compensated by means of the slide mechanism 37.

Therefore, the cutter 35 moves along the surface of the bone r without biting Into the bone nor departing from the surface of the bone. Accordingly, incision can be made smoothly along the surface of the bone r in longitudinal direction thereof, and as the cutter can run accurately along the boundary between the bone r and meat s, the meat adhering on the bone can be cut with increased yield of meat.

Further, in the incision making process of ST3 to ST5, in order to make it easy for the cutter 35 of the cutter tool 33 mounted on the multi-joint robot to reach the work 1, the work 1 is rotated by about 45° in clockwise direction when the work 1 is a right leg part and by about 45° in counterclockwise direction when the work 1 is a left leg by actuating a clamper drive device 44 based on the result of discrimination by the right/left leg discrimination means 81.

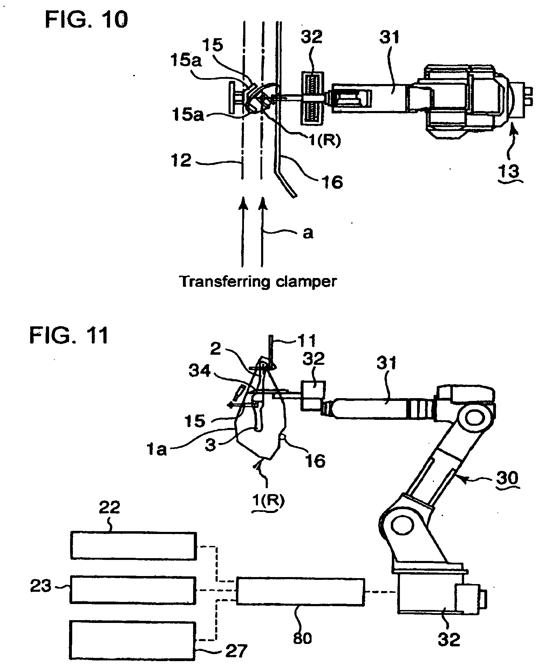

Next, a stabilizing means for stabilizing the work 1 when making incision in ST3 to ST5 will be explained with reference to FIGS.10 and 11. As shown in the drawings, a backside stabilizer 15 supports the surface of the fat layer of the work 1 from backward, a guide bar 16 supports a part of the work 1 where the hipbone 4 is removed. The backside stabilizer 15 is formed such that it has crooked parts 15a at both sides thereof to form a concaved part facing toward the work 1. The backside stabilizer 15 is transferred at the same speed as the work 1 and functions to support the surface of the fat layer, to define a back side reference face, and to prevent swinging of the work 1 in the transfer direction a.

In this way, by supporting the work 1 by the clamper 11, backside stabilizer 15, and guide bar 16, the work 1 is supported at three points, i.e. at an upper part, middle part, and lower part, the work 1 can be transferred without swinging in any direction, and incision can be made at required positions accurately at ST.3 to ST.5.

At ST4, incision is made from the upper part of the lower femur bone 2 to the lower side of the knee joint 5. A cutter tool manipulated by the multi-joint robot 40 is composed similar to that used in ST3. The line of incision made here is shown by h in FIG.8b.

In the incision making step of ST5, the cutter is inserted from the upper part of the lower femur bones 2 into a part of meat 54 (chimaki in Japanese), the cutter end further advances passing by the side face of the knee cap 6 to the lower side of the knee joint 5. The line of incision made here is shown by I in FIGS.8b and 8c. The incision line I in FIG.8c is rotated by about 90° relative to the incision line I in FIG.8b. This is because the lower femur bones 2 are twisted relative to the femur bone 3 and the incision line 58 runs along the bone, so the incision line 58 becomes a twisted line.

A cutter tool manipulated by the multi-joint robot 40 is composed similar to that used in ST3.

Although a multi-joint robot is installed separately for each of the steps ST3 to ST5, it is possible to use one multi-joint robot for making incision of ST3 to ST5 when transfer speed of the work 1 is slow.

Further, programs as explained in the following are memorized in the controller 80 in order to allow the plurality of multi-joint robots to make the incisions in the steps 3∼5 assigning an incision making task to each of the robots.

A plurality of cutting operation programs 82 are provided in the controller 80 shown in FIG9. Movement of the cutter 35 of the cutting tool 33 is programmed in each of the programs correspond to left, right, and size of the pig thighs 1. Each of the robots is specified to make a specified incision among a plurality of the incisions, and each of the programs is specified to be used to control the cutting tool drive device (incision making device) 32 of the specified robot. A program appropriate for the specified incision of a discriminated pig thigh 1 is selected by the selecting means 83 in the controller 80, and control signal for controlling the cutting tool drive device 32 is sent to the specified robot. In this way, incision making operation of a plurality of the incisions is performed by a plurality of the multi-joint robots.

For example, in the embodiment, three routes of incisions are to be performed in the work 1. Among the three 6-axis vertical multi-joint robots 30, 40, and 50 located along the transfer line of the work 1, the first robot 30 is specified to perform the incision from the upper part of the knee joint 5 to the lower end of the femur bone 3 as shown in FIG.8c with the line e, the second robot 40 is specified to perform the incision from the upper part of the lower femur bones 2 to the lower part of the knee joint 5 as shown in FIG.8b and c with the line h, and the third robot 50 is specified to perform the incisions which are made by allowing the cutter 35 to cut into the calf meat part 54 from the upper part of the lower femur bones 2, the end of the cutter to advance passing the side face of the knee cap 6 until it reaches the lower end of the knee joint 5 as shown in FIG.8b and c with the lines I(incisions in calf meat part).

The cutting operation programs 82 in the controller 80 include programs each of which is used corresponding left, right, and size, and routes of incisions (3 routes in the example).

When controlling the cutting operation of the first robot 30, an appropriate program is selected by the program selecting means 83 in accordance with left, right the pig thigh, and position of incision specified to be performed by the robot 30, and control signal for controlling the cutting tool 33 of the robot 30 is sent to the cutting tool drive device 32 of the robot 30.

When controlling the cutting operation of the second robot 40 or third robot 50, similarly an appropriate program is selected by the program selecting means 83 In accordance with left, right the pig thigh, and position of incision specified to be performed by the robot 40 or 50 is selected, control signal for controlling the cutting tool 33 of the robot 40 or 50 is sent to the cutting tool drive device 32 of the robot 40 or 50.

By allowing the controller to control the 6-axis multi-joint robots 30, 40, and 50 to perform the incision making operation in accordance with the position of incision, speed and accuracy of incision making operation can be increased, yield of meat is increased, and productivity is improved.

As described above, by performing the three routes of incisions, cutting operation of an arm or leg part of a slaughtered domestic animal can be performed with good efficiency, and meat scraping operation after the incision making operation can be performed smoothly, thereby attaining increased productivity.

Next, vertical cutting-in to a side of the knee cap 6 is performed by a round blade cutter 46 at ST6. This incision is indicated by a line j in FIG 1 and FIG.8c. The incision is made by a round blade cutter 46a for right thigh or round blade cutter 46b for left thigh. The cutters 46a and 46b are located to face each other with the clamper transfer chain 12 passing between them as shown in FIG2. The cutter 46a or 46b is selected by actuating a cutter changeover device 47 based on the result of discrimination of right or left of the thigh by the discrimination device 81 as shown in FIG9.

The result of discrimination by the right/left thigh discrimination means 81 is sent to the scraper changeover drive device 67. When the work 1 is a right thigh 1(R), the work 1(R) is posed by the scraper changeover device 67 so that the front side of the work 1(R) to face the round blade cutter 40a, and incision is made by the round blade cutter 40a. When the work 1 (L) is a left thigh 1(R), the work 1(L) is posed by the scraper changeover device 67 so that the front side of the work 1(L) to face the round blade cutter 40b, and incision is made by the round blade cutter 40b. By this, the work 1 is transferred in an attitude that the knee cap 6 thereof is directed toward upstream of the work transfer direction 'a' in steps ST6 to ST8, irrelevant to whether the work 1 is a right or left leg part. By making incision around the lower femur bones 2 until the lower side of the knee joint 5 and in the membrane between a knuckle meat part 51 (shintama) and inner thigh meat 52 around the femur bone 3, processes of scraping meat from the lower femur bones 3 and from the femur bone 3 in ST7 and ST8 are eased and yield of meat is increased.

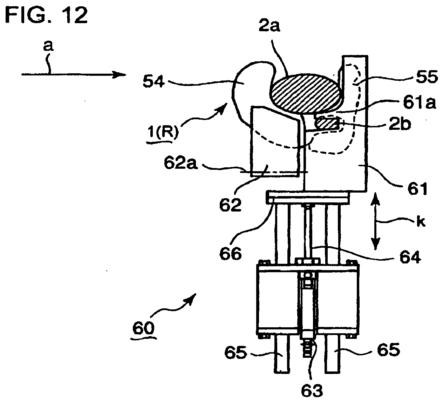

Then, meat scraping from the lower femur bones is carried out in ST7. This meat scraping is performed using a lower thigh scraping device 60 shown in FIGS. 12 and 13a∼c. The lower femur bones consist of a shinbone 2a and a fibula 2b as shown in FIG.12. The scraping device 60 is composed to meat the configuration of the lower femur bones 2.

Referring to FIGS. 12 and 13, the lower thigh scraping device 60 comprises a scraper plate 61, a base plate 66 onto which the scraper plate 61 is attached, an air cylinder 63, and a swing scraper plate 62. The base plate 66 is connected to a piston rod 64 of the air cylinder 63. The swing scraper plate 62 is urged by a spring not shown in the drawing to be swingable on a swing axis 62a fixed to the scraper plate 61. A pair of guide rods 65 is to guide up and down movement of the scraper plate 61 in directions shown by an arrow k. The swing scraper plate 62.

The scraper plate 61 has an inserting protrusion part 61 a which can intrude into the gap between the shinbone 2a and fibula 2b. The lower femur bones 2 are surrounded by the shank 55 and a meat part 54 (chimaki in Japanese) adhering to the bones. It is necessary to use scraper plates of different shape separately for a right leg part and left leg part, for relative position of the shinbone and fibula differs depending on whether it is right leg or left leg.

To deal with this, a right lower thigh scraping device 60a is provided with a right thigh scraper plate and a left lower thigh scraping device 60b provided with a left thigh scraper plate are located to face each other with the clamper transfer chain 12 passing between them as shown in FIG.2.

The work 1 is already posed concerning its rotation position in ST6 based on the result of discrimination at ST1 whether the work 1 is right leg or left leg such that the backside of a right leg part faces toward the right lower thigh scraping device 60a and the backside of the left leg faces toward the left lower thigh scraping device 60b, so meat scraping of the right leg is carried out by the right lower thigh scraping device 60a and scraping of the left leg is carried out by the left lower thigh scraping device 60b. The lower thigh scraping device 60 shown in FIG 12 is a right lower thigh scraping device 60a.

When the work 1 (R)(a right leg is assumed in this explanation) processed in ST6 has been transferred to ST7 in the transfer direction a, the air cylinder 63 is actuated to push the scraper plate 61 toward the work 1(R) at the timing right before the work 1(R) comes in front of the scraper plate 61. By this, the inserting protrusion part 61a of the scraper plate 61 intrudes into the gap between the shinbone 2a and fibula 2b of the work 1(R), at the same time the swing scraper plate 62 contacts the calf meat part 54 to be swung upward, and the leading end of the swing scraper plate 62a comes close to the surface of the shinbone. Thus, the scraper plate 61 comes on the shank 55 and the swing scraper plate 62 comes on the calf meat 54.

As the work 1(R) is further transferred horizontally in direction of arrow a, the work 1(R) is slanted with its lower femur bones 2 held by the scraper plate 61 and swing scraper plate 62 as shown in FIGS.13a and 13b. As the clamper 11 is attached to the swing chain 12 via the swing axis 11a, the work 1(R) is slanted easily, and the lower femur bones 2 are raised obliquely upward in relation to the clamper plates 61.

In this way, meat around the lower femur bones is scraped off Due to the weight of the slanted work 1®, the fibula 2b is pressed to the scraper plate 61 further stronger as the work 1® is transferred. Meat between the shinbone 2a and fibula 2b is adhered strongly to the shinbone 2a and fibula 2b. When carrying out de-boning manually, meat scraping is performed after incision is made between the fibula 2b and shinbone 2a.

With the apparatus of the embodiment, the inserting protrusion part 61 a of the scraper plate 61 is inserted in between the fibula 2b and shinbone 2a, the fibula 2b is pressed to the scraper plate 61 strongly as the ankle of the work 1® is pulled by the clamper 11 in a state the shank and calf meat 54 are held down by the scraper plate 61 and swing scraper plate 62, so meat between the fibula and shinbone can be scraped off Further, by forming the end part of the inserting protrusion part 61 a of the scraper plate 61 to be sharp like a cutter, effect of scraping the meat between the fibula and shinbone can be further increased.

As not only meat between fibula and shinbone, but also meat around the lower femur bones can be scraped off by one meat scraping process, processing time is shortened, resulting in increase processing capacity. Further, as the shinbone 2a increases in diameter in the lower parts, inclination of the work 1(R) to the vertical line increases as the work 1 (R) moves in the transfer direction a as shown in FIG 13c. By this, meat around the shinbone 2a can be scraped off along the profile of the surface of the shinbone 2a with high yield of meat and without damaging the shinbone 2a.

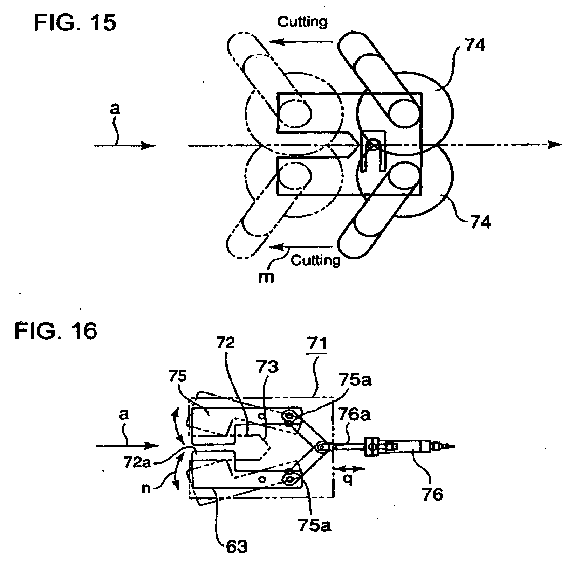

Next, the work 1 (R) with meat around the lower femur bones scraped is transferred to ST8 in an attitude the knee cap is directed toward upstream of the transfer direction. In ST8 is provided a meat scraper plate 71 located at a height position where the joint part 5 of the work 1 (R) is in the transfer route, the meat scraper plate 71 being inclined downward to the transfer direction a. The meat scraper plate 71 has a recess 72 as shown in FIG 16. The recess 72 is open toward upstream of the transfer direction a(the opening being indicated by reference numeral 72a), the width of the opening 72a being such that the joint part 5 can intrudes into the recess 72, and the bottom of the recess 72 is formed in a V-shape in order to bring the femur bone toward central part so that the femoral head does not interfere with the edge of the recess 72 when scraping meat.

A pair of round blade cutters 74 as shown in FIG.15 is provided right above the meat scraper 71 parallel thereto. The pair of cutters 74 serves to make incision around the femur bone 3 at middle parts between the part just above the knee cap 5 and the femoral head and make final cutting below the femoral head to separate the meat finally. The position of the final cutting is determined by detecting the position of the knee joint 5. When cutting with the pair of the round lade cutter 74, each of the cutters is moved toward the right and left direction respectively in relation to the transfer direction a and also moved in the direction opposite to the transfer direction as shown by an arrow m. By moving the round blade cutters 74 in the direction m opposite to the transfer direction a, cutting speed is increased, smooth cutting is assured.

A pair of swing plates 75 is attached to the meat scraper 71 to close the opening 72a of the concave portion 72 in order to prevent the femur bone intruded into the recess 72 of the meat scraper 71 from being disengaged. Each of the swing plates 75 supported by the meat scraper plate 71 swingable in directions shown by an arrow n about a swing center 75a by moving a piston rod 76a of an air cylinder 76 in direction shown by an arrow q, thereby opening up or closing down the opening 72a of the recess 72.

The knee joint part 5 of the work 1 (R) transferred in the direction a to ST8 comes into the recess 72 of the meat scraper plate 71 provided at the height position of the knee joint 5. When the knee joint part 5 of the work 1 (R) intrudes into the recess 72, the air cylinder is actuated to swing the pair of swing plates 75 to close the opening 72a of the meat scraper plate 71, thus the joint side end part of the femur bone of the work 1 (R)is chucked by the meat scraper plate 71.

The clamper 11 continues to move horizontally in the direction a, the meat part of the work 1(R) is pushed obliquely upwardly by the undersurface of the meat scraper plate 71 which is fixed in position and the femur bone 3 is strongly pressed to the V-shaped bottom 73 of the recess 72 of the meat scraper plate 71 by force due to the weight of the work 1(R).

By this, effect of scrapping meat by the meat scraper 71 is increased. As the clamper 11 is transferred while the ankle of the work 1 is clamped with the clamper 11, the meat part of the work 1 is pressed strongly toward downstream by the undersurface of the meat scraper plate 71. Further, as the meat part of the work 1 (R) is pushed with the knee cap 6 positioned in the upstream side, the work 1(R) slants toward inner thigh meat 52 due to the weight of the work 1 (R) and the inner thigh meat 52 is pressed to the under surface of the meat scraper plate 71, the work 1(R) moves toward the arrow t while the inner thigh 52 being scraped along the incision line e(see FIG.8c). Therefore, meat does not intrudes into a gap between the femur bone 3 and the recess 72, clogging of meat in the gap does not occur.

With conventional automatic de-boning apparatus disclosed in the patent literature 1, as a work to be de-boned is pulled up vertically with its ankle clamped, scraped meat gets entangled with the bone and clogging occurs. Therefore, it was not possible to scrape meat by one stroke without the clogging, and it was necessary to carry out a number of scraping with a small scraping stroke of each scraping to evade occurrence of the clogging. With the apparatus of the embodiment, meat scraping can be completed by one scraping operation.

Further, when scraping meat from a femur bone, at least two incisions is needed to be made along the femur bone before performing meat scraping, whereas according to the embodiment, only one incision made at ST3 is needed along the femur bone before scraping meat from the femur bone.

Further, with the embodiment, meat scraping can be performed with increased yield of meat, by making two incisions around the bone between the part just below the knee joint part and the femoral head and cutting biological tissue such as meat, tendon, ligament, etc. adhering to the bone.

As has been described heretofore, according to the embodiment, meat scraping process is simplified dramatically, process time Is shortened, and processing capacity is increased. Further, a number of sets of combination of a meat scraper, cutter, and work lifting device are needed to compose a conventional de-boning apparatus, whereas according to the embodiment, meat scraping similar to the conventional meat scraping can be carried out by providing only one set of combination of a meat scraper and cutter, and a work transfer device-Therefore, substantial cost reduction and space-saving are attained.

The bones separated from the meat part 7 and remaining in a state clamped with the clamper 11 in ST8 is released from the clamper 11 by means of a bone discharging means not shown in the drawings falls down to be discharged form the apparatus.

### [The second embodiment]

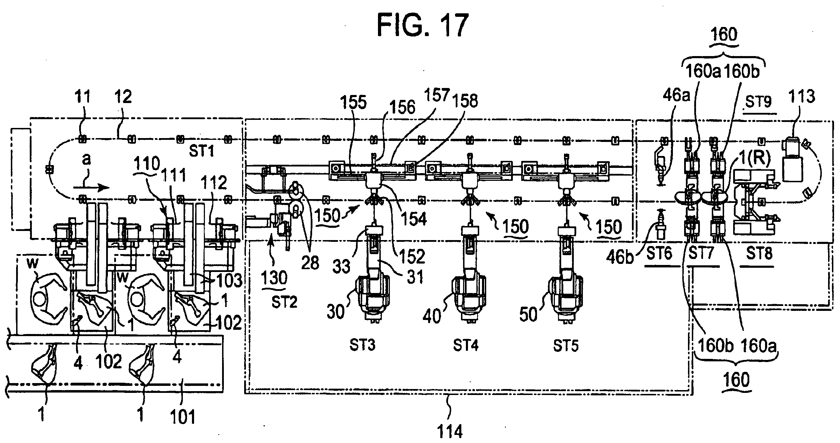

The second embodiment of the present invention will be explained with reference to FIGS. 17 to 30. FIG 17 is a plan view showing overall configuration of the apparatus of the second embodiment Referring to FIG 17, a pig leg part 1 with the hipbone not removed is transferred on a belt conveyor 101 to ST1. Each worker w shifts the pig leg part 1 onto a cutting board 102 and removes the hipbone 4 on the cutting board 102 as a preprocessing. Then the worker w inserts the ankle part of the pig leg part 1 with the hipbone 4 removed into a gap between two work hanger tables 103 arranged parallel to each other. The work 1 hanged between the gap formed by the two work hanger tables 103 is pushed intermittently toward a discrimination device 110 for discriminating whether the pig leg is a right leg or left leg by a pusher actuated by an air cylinder not shown in the drawing. Constituent parts and devices the same to those of the first embodiment are indicated by the same numerals, and their explanation is omitted.

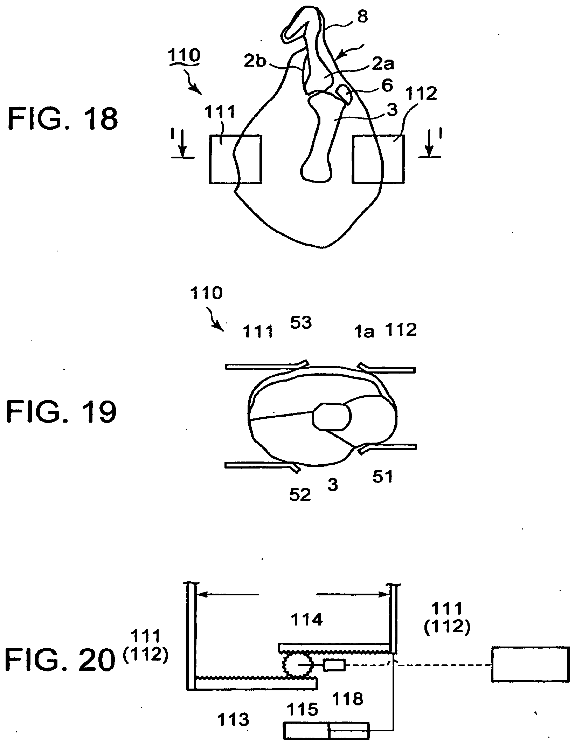

Construction of the discrimination device 110 will be explained with reference to FIG 18 to 20. FIG 18 shows the state the discrimination device 110 is applied to discriminate right or left of a pig leg part, FIG 19 is a section along line I-I on FIG.18, and FIG20 shows drive mechanism of a pair of measuring arms of a pair of measuring arms 111(112) of the discrimination device 110. As shown in FIG 17, the two work hanger tables 103 are located so that the gap between the two work hanger tables 103 is perpendicular to a transfer chain 12 moving in a horizontal plane. The ankle part of the pig leg part 1 is inserted into the gap between the work hanger tables 103 so that the fat layer 1 a is directed toward the transfer chain 12 by the worker. Then the pig leg part is pushed toward the discrimination device 110 in a hanged attitude as mentioned above.

In this state, the pairs of measuring arms 111 and 112 approach a pig leg part 1 with hipbone removed(work 1) from either side of the work 1 to pinch the work 1. The pair of measuring arms 111 and 112 stops when they have pinched the work 1. Mechanism for driving the measuring arms will be explained referring to FIG20. In FIG20, the pair of measuring arms 111 (112) has a rack 113(114) extending horizontally (perpendicular to the pair of arms 111(112)) fixed to the arms. Each of the racks 113,114 engages with a pinion 115 located between the racks.

A piston rod 117 connected to a piston 116a of an air cylinder 116 is connected to one of the measuring arms of the pair of measuring arms 111 (112). Distance α(or β) between the arms of the air of arms 111 (112) can be adjusted by actuating the air cylinder 116. An encoder 118 is connected to the pinion 115. The distance α(or β) is detected by detecting rotation angles or counting the number of rotation of the encoder 118 by means of a judging means 119 forjudging right or left of a thigh. As the air cylinder is actuated by air which is compressible fluid, the pair of measuring arms 111(112) stops automaticallywhen it clamps the work 1 and receives reaction force of certain largeness from the work 1.

Then, measured distance α and p are compared. For example, it is judged that, when α<β, the work 1 is a right thigh, and when α<β, the work 1 is a left thigh. The measurement is carried out by pinching the work 1 with two pairs of measuring arms when the work 1 transferred intermittently to a position in front of the discrimination device 110 is stopped there, discrimination of a right thigh from a left thigh can be done accurately with the discrimination device of simple construction.

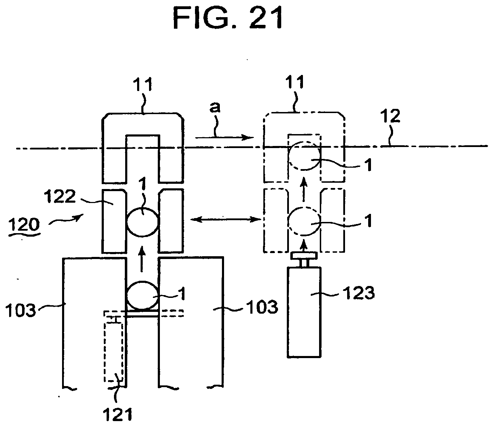

Then the work 1 is shifted to the clamper 11 attached to the transfer chain 12. A work shifting device 120 will be explained referring to FIG.21. In FIG.21, the work 1 hanging in the gap between the work hanger tables 103 is pushed by an air cylinder 121 to a work shift guide 122 located between the work hanger tables 103 and transfer chain 12. The work shift guide 122 has a pair of clamper plates between which the ankle part of work 1 is inserted pushed by the air cylinder 121. The work shift guide 122 can be moved in the same direction and at the same speed in synchronism with the clamper 11 by a drive means not shown in the drawing. The work 1 is shifted to the clamper 11 pushed by an air cylinder 123 toward the clamper 11 while the work shift guide 122 is moving in synchronism with the clamper 11. After the work 1 is shifted to the clamper 11, the work shift guide 122 is returned to the original position said drive means.

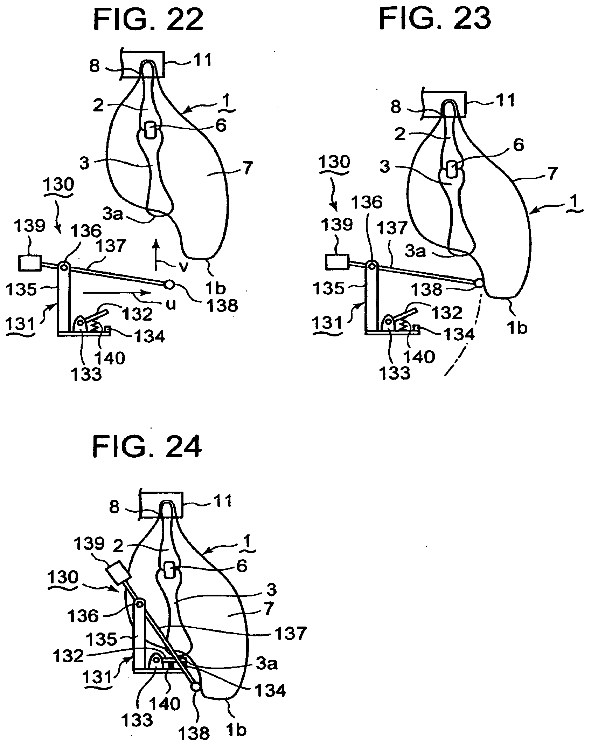

The clamper 11 attached to the transfer chain 12 driven by a transfer chain drive device 113(see FIG. 17) is moving at a constant speed, and the work 1 shifted to the clamper 11 reaches in front of a work length detecting means 130. By the way, processing devices of ST2 to ST8 are surrounded by a safety railing 114 as shown in FIG 17. Construction of the work length detecting means will be explained referring to FIGS.22 to 25.

In the drawings, reference numeral 130 is a work length detecting means. A detecting arm 132 is supported swingablly at an end thereof by a bracket fixed to a base bracket 131. A limit switch or proximity switch 134(hereafter referred to as a switch 134) is fixed to a horizontal plate of the base bracket 131 below the other end of the detecting arm 132. Lifted distance of the base bracket 131 when the switch 134 has detected that the other end of the detecting arm 132 has come close to or contacted the switch 134, is measured.

A support shaft 136 is provided to an upper end part of a support pillar 135 of the base bracket 131, and a pusher arm 137 is supported swingablly via the support shaft 136. To the pusher arm 137 is attached a round bar 138 at an end thereof and a counter weight 139 at the other end. A spring 140 is provided on the horizontal plate of the base bracket 131 under the detecting arm 132 to push the detecting arm upward so that the end of the detecting arm 132 is kept apart from the switch 134 unless force exerts to push down the detecting arm 132. The round bar 138 attached to the pusher arm 137 is a long bar, so the pusher arm 137 can be rotated in clockwise direction smoothly without the round bar 138 interrupted by the work 1.

As the work 1 is got rid of the hipbone 4, the lower part thereof is scooped out deeply and femoral head 3a is exposed. The femoral head 3a is not so apart from the lower end part 1b of the work 1, so when the detecting arm 132 comes near to the work 1, the end of the detecting arm 132 may interfere with the lower end part 1b of the work 1. With the work length detecting means 130 composed like this, first the base bracket 131 is advanced in direction of arrow u into position, then lifted up in direction of arrowv. As shown in FIG.14, when the base bracket 131 is advanced and lifted, the round bar 138 attached to the pusher arm 137 comes to contact with the lower end part of the work 1, pushes away the work 1, so the detecting arm 132 does not come to contact with the lower end part of the work 1. The pusher arm 137 swings downward by reaction force that the round bar 138 receives from the work 1. Then the base bracket 131 is lifted as shown in FIG24. The detecting arm 132 comes to contact with the femoral head 3a and pushed down by the femoral head 3a, so the detecting arm 132 swings downward and its end part comes close to or contact the switch 134. This is detected by the switch 134, and lifted distance of the base bracket 131 when the switch 134 has detected this is detected, and work length W is calculated in the same way as the first embodiment shown in FIGS.3a, 3b.

With the work length detecting means 130, the detecting arm 132 comes to contact with the femoral head 3a of the pig leg part 1 after the pusher arm 137 comes to contact with the lower end part 1 b of the pig leg part 1 and pushes it away, so the detecting arm 132 can come to contact with the femoral head 3a without interfered by the thigh meat. Therefore, work length W can be measured accurately

The work length detecting means 130 is transferred at the same speed as the work transfer speed during the measurement When the measurement is finished, the work length detecting means 130 is returned to the initial position.

Then, meat is cut all around the ankle part(a part of the lower femur bones just below the clamper 11 as shown by a line c In FIG 1) with a set of round blade cutters 28 composed the same to that of the first embodiment to make meat scraping possible in the post processing.

Incision making processes in ST3 to ST6 are done in the same way as done in the first embodiment. However, in the second embodiment, work stabilizing mechanism when performing incision making processes In ST3 to ST5 using robot arms 30 to 50 is different from that of FIGS.10 and 11 of the first embodiment. Work stabilizing mechanism of the second embodiment will be explained with reference to FIGS.17, 26, and 27.

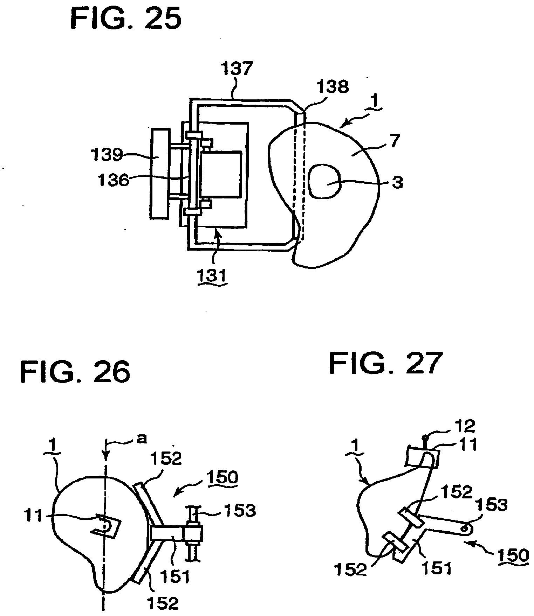

Referring to FIGS.26 and 27, the stabilizing mechanism of the embodiment adopt a backside supporting mechanism 150 to support the work 1 from the backside(fat layer 1a side) of the work 1. The backside supporting mechanism 150 is composed of a base support member 151 which is disposed to face the backside of the work and slanting from vertical direction, pairs of arms 152 of which the arms of each pair extend from the base support member 151 toward both sides and slanted forwardly so that the support arms 152 can contact the backside surface of the work 1, and a support shaft 153 for supporting the base support member 151. The work 1 is supported by the supporting mechanism in a state it is slanted forwanity, that is, the work hanging from the clamping device is slanted pushed forward by the arms 152 as shown in FIG.27. Therefore, a part of the weight of the work 1 is supported by the supporting mechanism, so the work 1 is not swung by the force applied by the cutter manipulated by the robot 30, 40, or 50 when incision is made to the work, that is, the work 1 is stabilized against the cutting force of the cutter. Further, incision making is facilitated by slanting the work 1.

In the embodiment, the guide bar 35 provided in the front side of the work 1 in the case of the first embodiment shown in FIGS.10 and 11 is not provided. As the work 1 is supported in an attitude slanted forwardly as shown in FIG27, the work 1 can be stabilized when making incision to the work 1 without the guide bar 16. As the guide bar 16 is not provided, it is possible to accommodate the work 1 of various lengths.

Mechanism of driving the backside supporting mechanism will be explained referring to FIG 17. The base support member 151 of the backside stabilizing mechanism 150 Is attached to a block via the support shaft 153. The block 154 is engaged with a timing belt 157 and can be moved in the transfer direction a in synchronism with the transfer of the clamper 11 bydriving(rotating) the endless belt 157 by means of a servo motor 158.

The block 154 is also engaged with a linear guide155 slidably so that the block can be moved smoothly without rattled by the force acting from the robot arm.

When making incision, the supporting mechanism 150 is moved in the transfer direction a at a speed the same as the clamper 31 in synchronism with the clamper 11 and supports the work 1 on the backside thereof. When incision is finished, the backside stabilizing mechanism 150 is departed backward from the transfer route of the clamper 11 by actuating an air cylinder 156 attached to the block 154. Then the block 154 is moved in the direction opposite to the transfer direction a to be returned to the initial position. The block 154 is again advanced to the transfer route of the clamper 11 and support the next work 1 from the backside thereof.

With the backside stabilizing mechanism 150 of this construction, control of transfer speed of the mechanism 150 is possible by the servo motor 148, so the mechanism 150 can accommodate an arbitrary transfer speed of the work. Further, installation space is reduced as compared with the backside stabilizer 33 transferred by the chain 34 as shown in FIG.7.
Furthermore, when the backside stabilizing mechanism 150 is returned to the initial position, it is returned at a speed of 2 or 3 times the transfer speed of the work, so it can accommodate speeding up of work transfer.

After incision making process at ST5, the work 1 comes to ST6, where vertical cutting-in to a side of the knee cap 6 is performed by a round blade cutter 46 at ST6. Then the work 1 enters the ST7. In FIG.17, right lower thigh scraping device 160a and left lower thigh scraping device 160b are located to face each other with the transfer chain 12 passing between them.

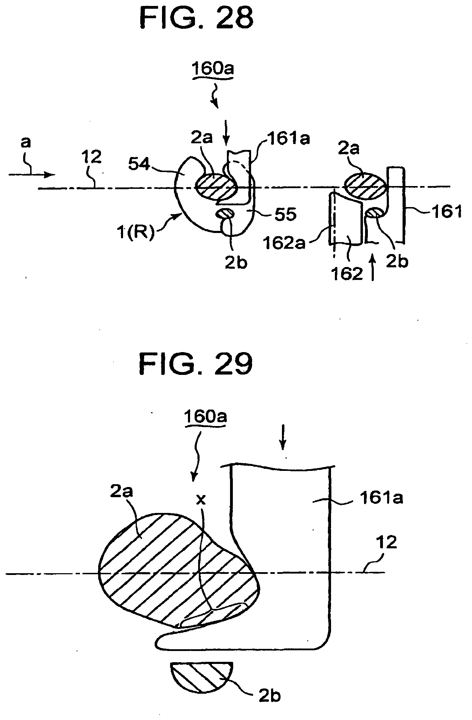

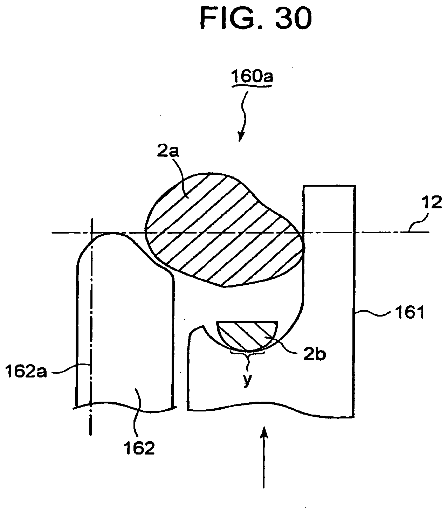

Lower thigh scraping process at ST7 in the second embodiment will be explained referring to FIGS.28 to 30. In the drawings, the explanation will be done in the case of a right leg part, i.e. work 1(R). Although the inserting protrusion part 61 a to be inserted in between the shinbone 2a and fibula 2b is formed integral with the scraper plate 61 of the right lower thigh scraping device 60a in first embodiment as shown in FIG 12, in the second embodiment, a separate plate member 161a is provided instead of the inserting protrusion part 61a in the first embodiment, and a scraping plate 161 of the right lower thigh scraping device 160a has no inserting protrusion part to be Inserting in between the shinbone 2a and fibula 2b as shown in FIG29. Referring to FIGS.29 and 30, first the plate member 161a having an inserting protrusion part at its end is moved across the transfer line 12 from the opposite side of the scraping device 160a, and the inserting protrusion part of the plate member 161a intrudes into the gap between the of the shinbone 2a and fibula 2b of the transferring work 1(R). Then the scalper plate 161 and a swing scraper plate 162 are moved toward the transfer line 12 to contact to the bones of the work 1(R) as shown in FIG29. Then, meat around the lower femur bones is scraped off by the plate member 161 a, scraper plate 161, and swing scraper plate 162. The swing scraper plate 62 is swingable on a swing axis 162a, and urged by an elastic force downward swing direction.

With this construction of the lower thigh scraping device, the plate member 161 a having an inserting protrusion part to be inserting in between the shinbone 2a and fibula 2b is provided separately from the scraper plate 161, so the inserting protrusion part of the plate member 161a can be brought into contact with the rear surface of the shinbone 2a(portion x in FIG 29) without fail. Therefore, meat near here can be positively scraped. On the other hand, the scraper plate 161 can be brought into contact with the outer surface of the fibula 2b(portion y in FIG30) without fail, so meat near here can be positively scraped. As a result, yield of meat is increased.

In the second embodiment, construction other than mentioned above is the same as that of the first embodiment In the second embodiments, discrimination of the work 1 whether it is a right thigh or left thigh is done by the discrimination device 110 In ST1 In a state the work 1 is not transferring, the discrimination can be done accurately without fail. In the succeeding steps, processing is done while transferring the work 1 continuously at a constant speed, and the backside stabilizing mechanism 150 is adopted which can accommodate speed up of work transfer, so, processing capacity of 500 thighs/hr, for example, can be attained. Further, as work length detecting means which can detect the length of the work accurately and efficient thigh meat scraping devices are adopted, yield of meat can be increased.

### Industrial Applicability

According to the invention, automation level of de-boning operation of an arm or leg part of a slaughtered domestic animal is increased by automating incision making which has been not automated in the past because of its difficulty, and de-boning process is dramatically simplified. As a result, processing time is shortened and process efficiency is largely increased.

## Claims

1. A method of de-boning work (1) being an hind leg part of a slaughtered pig with its hipbone (4) removed, the method comprising:
an incision making process (ST3, ST4, ST5) for making incision along bones of the work (1) including a knee joint part (5) thereof in longitudinal direction of the bones while transferring the work (1) in a state hanged from a clamping device with its ankle (8) clamped with the clamping device,
a positioning process for positioning the ankle part of the work (1) transferring with the ankle (8) clamped with the clamping device by allowing a part of the ankle part right under the clamping device to intrude into a concave portion (72) of a scraper plate (61, 71, 161) located downstream of the transferring work (1) so that it slants downwardly toward the transfer direction (a) of the clamping device, the concave portion (72) being shaped such that the bones of work (1) can pass through, and
a meat scraping process for scraping down meat surrounding the bones by transferring the clamping device, whereby the meat is held down by the scraper plate (61, 71, 161) and receives scraping force slanting downwardly toward upstream of the transfer direction (a) from the scraper plate (61, 71, 161), thereby the meat being scraped off from the bones as the clamping device is transferred **characterized in that**
a discrimination process is performed using a discrimination means (81, 110) to discriminate whether the work (1) is a right or left work,
a length detection process is performed using a work length detecting means (130) to detect the length of the work (1), and
the incision making process (ST3, ST4, ST5) comprises
controlling the movement of a cutter (35) of a cutting tool (33) being attached at an end part (31a) of a robot arm (31) of a six-axis multi-joint robot (30) by selecting an appropriate operation program of a plurality of operation programs (82) being provided in a controller (80) by a program selecting means (83) based on detection result of right or left and length of the work (1) and sending a control signal based on the selected operation program from the controller (80) to the six-axis multi-joint robot (30), each of the plurality of operation programs (82) defining movement of the cutter (35) to correspond with right or left and length of the work (1).

2. A method of de-boning a leg part of a pig with its hipbone removed according to claim 1, wherein the method includes:
an incision making process for making incision to meat part of the pig leg along the lower femur bones (2) and femur bone (3) of the pig leg part in longitudinal direction of the bones while transferring the pig leg part in a state hanged from the clamping device with its ankle (8) clamped with the clamping device,
a first positioning process for positioning the ankle part of the pig leg part transferring with the ankle (8) clamped with the clamping device by allowing a part of the ankle part right under the clamping device to hit a first scraper plate located downstream of the transferring pig leg part so that an inserting protrusion part (61a) of the first scraper plate is inserted in between a shinbone (2a) and fibula (2b) composing the lower femur bones (2), whereby its shank meat is allowed to position right under the first scraper plate (61) and calf meat is held down by a swing scraper plate (62) attached swingable to the scraper plate,
a first meat scraping process for scraping off meat surrounding the lower femur bones (2) by transferring the clamping device in a state that the meat surrounding the lower femur bones (2) is held down by the first main scraper plate and swing scraper plate (62), whereby the meat receives scraping force slanting downwardly toward upstream of the transfer direction (a) from the first main scraper plate and the swing scraper plate (62) to be scraped off from the lower femur bones (2) as the clamping device is transferred,
a second positioning process to position the pig leg with meat scraped from the lower femur bone (2) remaining by transferring the pig leg part in a state hanged from the clamping device and allowing the knee joint (5) between of the pig leg part to intrude into a concave portion of a second scraper plate slanted downward toward downstream of the transfer direction (a), the concave portion being open toward upstream of the transfer direction and shaped such that the knee joint (5) and femur bone (3) can pass through,
a second meat scraping process for scraping off meat surrounding the femur bone (3) by transferring the clamping device in a state the meat is held down by the second scraper plate, whereby the meat receives scraping force slanting downwardly toward upstream of the transfer direction (a) from the second scraper plate to be scrapped off from the femur bone (3) as the clamping device is further transferred, and
a final severing process for separating the meat from the femoral head (3a) of the femur bone (3).

3. A method of de-boning as claimed in claim 2, wherein said incision making process includes;
a first incision making process to make incision such that the tip of a cutter (35) enters the meat from the upper part of the knee joint part (5) of the pig leg and travels along the surface of the femur bone (3) and the middle part of the cutter (35) travels along a membrane between inner thigh meat and knuckle meat until the end of the femoral head (3a),
a second incision making process to make incision from the upper part of the lower femur bones along the lower femur bones (2) until the lower part of the knee joint (5); and
a third incision making process to make incision such that the tip of the cutter (35) enters the calf meat and travels passing by the knee cap until below the joint part (5),
thereby allowing smooth meat scraping and preventing clogging of meat at the pinching part of the meat scraper plate when scraping meat in a state the knee cap is in the upstream side from the femur bones.

4. A method of de-boning as claimed in claim 2, wherein the pig leg part is clamped with the clamping device and hanged from it such that the fat layer (1a) of the pig leg part is directed always toward a determined direction, a plate swingable on a swing axis (62a) is moved up from below the hanged pig leg part until the plate comes to contact with the femoral head (3a) of the pig leg part so that the swing axis (62a) is on a center line of the hanged pig leg, whereby whether the pig leg is a right leg or left leg is detected by detecting direction of dip of the plate upon contacting the femoral head (3a); and lifted distance of the plate when the plate contacts the femoral head (3a) is detected and length of the pig leg part is calculated based on lifted distance detected.

5. A method of de-boning as claimed in claim 4, wherein a plurality of programs (82) in each of which movement of a cutter (35) for making incision is set beforehand to correspond with right or left and length of the pig leg part, a program which corresponds the most appropriately with a pig leg part to be processed is selected from among the plural programs based on the result of detection of right or left and length of the pig leg part, and the cutter (35) is manipulated under the selected program.

6. A de-boning apparatus for de-boning a work (1) being an hind leg part of a slaughtered pig with its hipbone (4) removed comprising:
a clamping device for clamping and hanging the work (1),
a transfer device for transferring the clamping device horizontally,
an incision making device (32) for making incision to meat along surfaces of bones of the work (1) in longitudinal direction of the bones, and
a scraper plate (61) which has a concave portion (72) shaped such that the bones of the work (1) can pass through and located downstream of the transferring pig leg part so that it slants downwardly toward transfer direction (a) of the clamping device, whereby the work (1) is transferred in a state that a part of the ankle part right under the clamping device has intruded into the concave portion (72) of the scraper plate (61), thereby the meat adhering to the bones being held down by the scraper plate and receiving scraping force slanting downwardly toward upstream of the transfer direction (a) from the scraper plate (61) to be scraped off from the bones as the clamping device is transferred
**characterized in that**
a discrimination means (81, 110) is provided able to perform a discrimination process to discriminate whether the work is a right or left work, and
the incision making device (32) comprises a plurality of six-axis multi-joint robots (30, 40, 50) each with a robot arm (31) and a cutting tool (33) comprising a cutter (35) being attached at an end part (31a) of the robot arm (31),
and a work length detecting means (130) is provided able to perform a detection of the length of the work (1),
and a controller (80) comprising a program selecting means (83) and a plurality of operation programs (82) each of which defines movement of the cutter to correspond with right or left and length of the work (1), wherein the controller (80) is connected to each six-axis multi-joint robot (30) and is operable to control the cutting tool (33) of the six-axis multi-joint robot (30, 40, 50) by selecting an appropriate operation program by the program selecting means (83) based on detection result of right or left and length of the work (1) and sending a control signal based on the selected operation program from the controller (80) to the six-axis multi-joint robot (30).

7. An apparatus for de-boning a leg part of a pig with its hipbone (4) removed according to claim 6, wherein the apparatus comprises:
a transfer means for transferring clamping devices each of which clamps the pig leg part with its ankle (8) to hang it;
a plurality of incision making means for making incision to meat part of the pig leg part along its lower femur bones (2) and femur bone (3) in longitudinal direction;
a first meat scraping means for scraping meat surrounding the lower femur bones (2) as the pig leg part is transferred, comprising,
an inserting protrusion part which enters the gap between a shinbone and fibula composing the lower femur bones (2) when the transferring pig leg part hits the inserting protrusion part,
a first scraper plate which is located downstream of the transferred pig leg part and holds down the shank meat when the pig leg part comes under the first scraper plate, and
a swing scraper plate (62) which holds down the calf meat when the pig leg part comes under these scraper plates;
a second meat scraping means for scraping meat surrounding the femur bone (3) as the pig leg part is further transferred, comprising,
a second scraper plate which is located downstream of the transferred pig leg part of which the meat surrounding the lower femur bones (2) is scraped off by the first scraping means, the second scraper plate slanting downwardly toward downstream of the transfer direction and having a concave portion which is open toward upstream of the transfer direction and being shaped such that the knee joint (5) and femur bone (3) can pass through the concave portion, and
a cutter device which cuts biological tissues around the femur bone (3) in process of scraping down the thigh meat from the femur bone and cuts off the meat from the femoral head (3a) at the end of the meat scraping;
whereby the meat surrounding the lower femur bones (2) is scraped off by transferring the clamping device to allow the meat to receive scraping force slanting downwardly toward upstream of the transfer direction from the first scraper plate, the meat surrounding the femur bone is scraped off by further transferring the clamping device to allow the meat to receive scraping force slanting downwardly toward upstream of the transfer direction from the second scraper plate, and the meat scraped off from the lower femur bones and femur bone is cut off from the femoral head by the cutter.

8. A de-boning apparatus as claimed in claim 7, wherein the incision making means comprises:
a first incision making means for making incision such that the tip of a cutter enters the meat from the upper part of the knee joint part (5) of the pig leg and travels along the surface of the femur bone (3) and the middle part of the cutter travels along a membrane between inner thigh meat and knuckle meat until the femoral head (3a) side end of the femur bone (3),
a second incision making means for making incision from the upper part of the lower femur bones (2) along the lower femur bones until the lower part of the knee joint (5); and
a third incision making means for making incision such that the tip of the cutter enters the calf meat and travels passing by the knee cap until below the joint part.

9. A de-boning apparatus as claimed in claim 7, wherein the discrimination means (81) for discriminating whether the pig leg part is a right leg or left leg and at the same time detecting length of the pig leg part is provided upstream of the incision making means, the discrimination means (81) having a plate which is swingable on a swing axis (62a) and swings when it comes to contact with the femoral head (3a) of the pig leg part hanging from the clamping device, whereby the plate is moved up toward the pig leg part from below until the plate comes to contact with the femoral head (3a) such that the swing axis (62a) moves on the vertical center line of the hanged pig leg part, discrimination of right or left of the pig leg part is done by detecting direction of dip of the plate upon contacting the femoral head (3a), and length of the pig leg part is detected by detecting lifted distance of the plate when the plate contacts the femoral head (3a) and calculating the length of the pig leg part based on the detected distance.

10. A de-boning apparatus as claimed in claim 7, wherein the discrimination means (81, 110) for discriminating whether the pig leg part is a right leg or left leg is provided upstream of the incision making means, the discrimination means comprising:
two pairs of measuring arms (111, 112) each of which being provided at a position capable of pinching the thigh meat of the pig leg part hanging with its ankle clamped with a clamping device so that the fat layer thereof is always faces to a determined direction,
a measuring arm drive means provided for each of the pairs of the measurement arms (111, 112) to move the arms to vary distance between the arms of each of the pairs of the measuring arms, and
a judging means (119) for judging whether the pig leg part is a right leg or left leg part;
whereby the judging means (119) detects distance between the arms of each pair of the measuring arms (111, 112), compares the detected distances, and judges whether the pig leg part is a right or left leg part from the result of the comparison.

11. A de-boning apparatus as claimed in claim 10, wherein said length detecting means (130) for detecting length of the pig leg part is provided upstream of the incision making means, the length detecting means (130) comprising:
a base bracket (131) which is moved up from below the transferring pig leg part clamped with its ankle (8) clamped with the clamping device and hanged so that the fat layer thereof is always faces to a determined direction advanced toward the pig leg part while being transferred at the same speed and in the same direction as those of the clamping device,
a detecting arm (132) supported swingable by the base bracket so that the detecting arm (132) swings downward upon contacting the femoral head (3a) of the pig leg part,
a proximity switch (134) for detecting proximity or contact of the detecting arm (132) to the proximity switch (134), and
a pusher arm (137) which is supported swingably above the detecting arm (132) by the base bracket (131) and extends toward the pig leg part, and which contacts the lower part of the thigh meat of the pig leg part first to push away the thigh meat when the base bracket (131) approach the thigh meat and swing downward receiving reaction force from the thigh meat,
whereby lifted distance of the base bracket (131) when the detecting arm (132) comes close to or contacts the proximity switch (134) is detected and length of the pig leg part is calculated based on the detected distance.

12. A de-boning apparatus as claimed in any one of claims 9-11, wherein said incision making means comprises a plurality of programs in each of which movement of a cutter (35) for making incision is set beforehand to correspond with right or left and length of the pig leg part, a selecting means (83) for selecting a program which corresponds the most appropriately with a pig leg part to be processed from the plural programs (82) based on the result of detection of right or left and length of the pig leg part, and a cutter drive means for manipulating the cutter under the selected program.

13. A de-boning apparatus as claimed in claims 9 or 10, wherein are provided
a meat scraping means for a right leg part and that for a left leg part are located to face each other with the clamping device transfer route passing between both of the scraper means, and
a judging means (119) for judging whether the first or second meat scraping means are to be used.

14. A de-boning apparatus as claimed in claims 7, wherein the transfer means is a continuous transferring device for transferring the clamping device hanging the pig leg part at a constant transfer speed passing by a work length detecting means (130), the incision making means, the first meat scraping means for scraping meat from the lower femur bones (2), and the second meat scraping means for scraping meat from the femur bones (3); and
the discrimination means (81, 110) for discriminating whether the pig leg part to be processed is a right leg or left leg part is provided to perform the discrimination before the pig leg part is clamped with the clamping device, and a work feeding device to feed the pig leg part in a hanged state to the discrimination device where said discrimination is performed and then feed to a work shift guide (122) for guiding the pig leg part from the work feeding device to the transferring clamping device is provided, the work shift guide (122) being provided between the transfer route of the clamping device and the work feeding device and can be moved in the same direction and at the same speed as the clamping device in synchronism with the transfer of the clamping device for a determined interval or section, and a pusher for pushing the pig leg part hanging from the pusher guide to the clamping device is provided.

## Patentansprüche

1. Verfahren zum Entbeinen eines Teilstücks (1), bei dem es sich um ein Hinterbeinteil eines geschlachteten Schweins mit entferntem Hüftknochen (4) handelt, wobei das Verfahren Folgendes umfasst:
einen Einschneidevorgang (ST3, ST4, ST5) zum Ausführen eines Schnitts entlang von Knochen des Teilstücks (1) einschließlich eines Kniegelenkabschnitts (5) desselben in Längsrichtung der Knochen, während das Teilstück (1) in einem von einer Einspannvorrichtung hängenden Zustand transportiert wird, wobei der Knöchel (8) in der Einspannvorrichtung eingespannt ist,
einen Positionierungsvorgang zum Positionieren des Knöchelabschnitts des unter Einspannung des Knöchels (8) in der Einspannvorrichtung transportierten Teilstücks (1), indem ein Einrücken eines Teils des Knöchelabschnitts direkt unter der Einspannvorrichtung in einen konkaven Abschnitt (72) einer dem transportierten Teilstück (1) nachgeordnet angeordneten Abstreiferplatte (61, 71, 161) ermöglicht wird, so dass sich die Abstreiferplatte in Richtung der Transportrichtung (a) der Einspannvorrichtung nach unten neigt, wobei der konkave Abschnitt (72) so geformt ist, dass die Knochen des Teilstücks (1) hindurchtreten können, und
einen Fleischabstreifvorgang zum Abstreifen von die Knochen umgebendem Fleisch durch Verfahren der Einspannvorrichtung, wobei das Fleisch von der Abstreiferplatte (61, 71, 161) niedergehalten und mit einer entgegen der Transportrichtung (a) schräg nach unten gerichteten Abstreifkraft beaufschlagt wird, wodurch das Fleisch beim Verfahren der Einspannvorrichtung von den Knochen abgestreift wird,
**dadurch gekennzeichnet,**
**dass** mittels eines Unterscheidungsmittels (81, 110) ein Unterscheidungsvorgang durchgeführt wird, um zu unterscheiden, ob es sich bei dem Teilstück (1) um ein rechtes Teilstück oder ein linkes Teilstück handelt,
mittels eines Teilstücklängenerkennungsmittels (130) ein Längenerkennungsvorgang durchgeführt wird, um die Länge des Teilstücks (1) zu erkennen, und
der Einschneidevorgang (ST3, ST4, ST5) das Steuern der Bewegung einer Schneideeinrichtung (35) eines an einem Endabschnitt (31a) eines Roboterarms (31) eines sechsachsigen Gelenkroboters (30) befestigten Schneidwerkzeugs (33) durch Auswählen eines geeigneten Betriebsprogramms aus einer Vielzahl von in einer Steuerung (80) vorgesehenen Betriebsprogrammen (82) durch ein Programmauswahlmittel (83) auf Basis des Ergebnisses der Erkennung eines rechten oder linken Teilstücks (1) und einer Länge des Teilstücks und Senden eines Steuersignals auf Basis des ausgewählten Betriebsprogramms von der Steuerung (80) an den sechsachsigen Gelenkroboter (30) umfasst, wobei die Betriebsprogramme der Vielzahl von Betriebsprogrammen (82) jeweils die Bewegung der Schneideeinrichtung (35) entsprechend dem linken oder rechten Teilstück (1) und der Länge des Teilstücks definieren.

2. Verfahren zum Entbeinen eines Beinteils eines Schweins mit entferntem Hüftknochen nach Anspruch 1, wobei das Verfahren Folgendes umfasst:
einen Einschneidevorgang zum Ausführen eines Schnitts in einem Fleischteil des Schweinebeins entlang der Unterschenkelknochen (2) und des Oberschenkelknochens (3) des Schweinebeinteils in Längsrichtung der Knochen, während das Schweinebeinteil in einem von der Einspannvorrichtung hängenden Zustand transportiert wird, wobei der Knöchel (8) in der Einspannvorrichtung eingespannt ist,
einen ersten Positionierungsvorgang zum Positionieren des Knöchelabschnitts des unter Einspannung des Knöchels (8) in der Einspannvorrichtung transportierten Schweinebeinteils, indem ein Auftreffen eines Teils des Knöchelabschnitts direkt unter der Einspannvorrichtung auf einer dem transportierten Schweinebeinteil nachgeordnet angeordneten ersten Abstreiferplatte ermöglicht wird, so dass ein Einführungsvorsprung (61a) der ersten Abstreiferplatte zwischen ein Schienbein (2a) und ein Wadenbein (2b), welche die Unterschenkelknochen (2) bilden, eingefügt wird, wodurch ein Positionieren des Unterschenkelfleischs direkt unter der ersten Abstreiferplatte (61) ermöglicht wird und das Wadenfleisch durch eine schwenkbar an der Abstreiferplatte befestigte Schwenkabstreiferplatte (62) niedergehalten wird, einen ersten Fleischabstreifvorgang zum Abstreifen von die Unterschenkelknochen (2) umgebendem Fleisch durch Verfahren der Einspannvorrichtung in einem Zustand, in dem das die Unterschenkelknochen (2) umgebende Fleisch von der ersten Hauptabstreiferplatte und der Schwenkabstreiferplatte (62) niedergehalten wird,
wodurch das Fleisch von der ersten Hauptabstreiferplatte und der Schwenkabstreiferplatte (62) mit einer entgegen der Transportrichtung (a) schräg nach unten gerichteten Abstreifkraft beaufschlagt wird, um beim Verfahren der Einspannvorrichtung von den Unterschenkelknochen (2) abgestreift zu werden,
einen zweiten Positionierungsvorgang zum Positionieren des Schweinebeins unter Verbleib des von dem Unterschenkelknochen (2) abgestreiften Fleischs, wobei das Schweinebeinteil in einem von der Einspannvorrichtung hängenden Zustand transportiert wird und ein Einrücken des zwischenliegenden Kniegelenks (5) des Schweinebeinteils in einen konkaven Abschnitt einer in Richtung der Transportrichtung (a) nach unten geneigten zweiten Abstreiferplatte ermöglicht wird, wobei der konkave Abschnitt entgegen der Transportrichtung offen ist und derart geformt ist, dass das Kniegelenk (5) und der Oberschenkelknochen (3) hindurchtreten können,
einen zweiten Fleischabstreifvorgang zum Abstreifen von den Oberschenkelknochen (3) umgebendem Fleisch, wobei die Einspannvorrichtung in einem Zustand, in dem das Fleisch durch die zweite Abstreiferplatte niedergehalten wird, verfahren wird, wodurch das Fleisch von der zweiten Abstreiferplatte mit einer entgegen der Transportrichtung (a) schräg nach unten gerichteten Abstreifkraft beaufschlagt wird, um beim weiteren Verfahren der Einspannvorrichtung von dem Oberschenkelknochen (3) abgestreift zu werden, und
einen finalen Abtrennvorgang zum Abtrennen des Fleischs von dem Hüftkopf (3a) des Oberschenkelknochens (3).

3. Verfahren zum Entbeinen nach Anspruch 2, wobei der Einschneidevorgang Folgendes umfasst:
einen ersten Einschneidevorgang zum Ausführen eines Schnitts, derart, dass die Spitze einer Schneideeinrichtung (35) ausgehend von dem oberen Teil des Kniegelenkabschnitts (5) des Schweinebeins in das Fleisch eintritt und an der Oberfläche des Oberschenkelknochens (3) entlangfährt und der mittlere Abschnitt der Schneideeinrichtung (35) an einer Membran zwischen dem Innenschenkelfleisch und der Unterschale bis zum Ende des Hüftkopfs (3a) entlangfährt,
einen zweiten Einschneidevorgang zum Ausführen eines Schnitts von dem oberen Teil der Unterschenkelknochen entlang der Unterschenkelknochen (2) bis zu dem unteren Teil des Kniegelenks (5); und
einen dritten Einschneidevorgang zum Ausführen eines Schnitts, derart, dass die Spitze der Schneideeinrichtung (35) in das Wadenfleisch eintritt und an der Kniescheibe vorbei bis unter den Gelenkabschnitt (5) fährt,
wodurch ein gleichmäßiges Fleischabstreifen ermöglicht und ein Stauen des Fleischs am Druckpunkt der Fleischabstreiferplatte verhindert wird, wenn Fleisch bei oberhalb des Oberschenkelknochens angeordneter Kniescheibe abgestreift wird.

4. Verfahren zum Entbeinen nach Anspruch 2, wobei das Schweinebeinteil in der Einspannvorrichtung eingespannt und an dieser aufgehängt ist, so dass die Fettschicht (1a) des Schweinebeinteils stets in eine festgelegte Richtung ausgerichtet ist, eine um eine Schwenkachse (62a) schwenkbare Platte von unterhalb des aufgehängten Schweinebeinteils nach oben bewegt wird, bis die Platte an dem Hüftkopf (3a) des Schweinebeinteils zur Anlage kommt, so dass die Schwenkachse (62a) auf einer Mittellinie des aufgehängten Schweinebeins angeordnet ist, wobei durch Erkennen einer Neigungsrichtung der Platte bei Anlage an dem Hüftkopf (3a) erkannt wird, ob es sich bei dem Schweinebein um ein rechtes Bein oder ein linkes Bein handelt; und eine Hebestrecke der Platte bei Anlage der Platte an dem Hüftkopf (3a) erkannt und eine Länge des Schweinebeinteils auf Basis der erkannten Hebestrecke berechnet wird.

5. Verfahren zum Entbeinen nach Anspruch 4, wobei aus einer Vielzahl von Programmen (82), in denen jeweils eine Bewegung einer Schneideeinrichtung (35) zum Schneiden entsprechend einem rechten oder linken Beinteil und einer Länge des Schweinebeinteils voreingestellt ist, auf Basis des Ergebnisses der Erkennung eines rechten oder linken Beinteils und einer Länge des Schweinebeinteils ein Programm ausgewählt wird, das einem zu bearbeitenden Schweinebeinteil in geeignetster Weise entspricht, und die Schneideeinrichtung (35) gemäß dem ausgewählten Programm betätigt wird.

6. Entbeinvorrichtung zum Entbeinen eines Teilstücks (1), bei dem es sich um ein Hinterbeinteil eines geschlachteten Schweins mit entferntem Hüftknochen (4) handelt, wobei die Vorrichtung Folgendes umfasst:
eine Einspannvorrichtung zum Einspannen und Aufhängen des Teilstücks (1), eine Verfahrvorrichtung zum horizontalen Verfahren der Einspannvorrichtung, eine Einschneidevorrichtung (32) zum Ausführen von Schnitten im Fleisch entlang von Knochenoberflächen des Teilstücks (1) in Längsrichtung der Knochen, und eine Abstreiferplatte (61), die einen konkaven Abschnitt (72) aufweist, der so geformt ist, dass die Knochen des Teilstücks (1) hindurchtreten können, und die dem transportierten Schweinebeinteil derart nachgeordnet angeordnet ist, dass sie in Richtung der Transportrichtung (a) der Einspannvorrichtung nach unten geneigt ist, wobei das Teilstück (1) in einem Zustand transportiert wird, in dem ein Teil des Knöchelabschnitts direkt unter der Einspannvorrichtung in den konkaven Abschnitt (72) der Abstreiferplatte (61) eingerückt ist, wodurch das an den Knochen haftende Fleisch durch die Abstreiferplatte niedergehalten wird und von der Abstreiferplatte (61) mit einer entgegen der Transportrichtung (a) schräg nach unten gerichteten Abstreifkraft beaufschlagt wird, um beim Verfahren der Einspannvorrichtung von den Knochen abgestreift zu werden,
**dadurch gekennzeichnet,**
**dass** ein Unterscheidungsmittel (81, 110) vorgesehen ist, welches einen Unterscheidungsvorgang zum Unterscheiden, ob das Teilstück ein linkes oder ein rechts Teilstück ist, durchführen kann, und
**dass** die Einschneidevorrichtung (32) eine Vielzahl von sechsachsigen Gelenkrobotern (30, 40, 50) umfasst, die jeweils einen Roboterarm (31) und ein Schneidwerkzeug (33) mit einer an einem Endabschnitt (31a) des Roboterarms (31) angeordneten Schneideeinrichtung (35) aufweisen,
und ein Teilstücklängenerkennungsmittel (130) vorgesehen ist, welches eine Erkennung der Länge des Teilstücks (1) durchführen kann,
und eine Steuerung (80), die ein Programmauswahlmittel (83) und eine Vielzahl von Betriebsprogrammen (82) umfasst, welche jeweils die Bewegung der Schneideeinrichtung entsprechend dem linken oder rechten Teilstück (1) und der Länge des Teilstücks definieren, wobei die Steuerung (80) mit jedem sechsachsigen Gelenkroboter (30) verbunden ist und zum Steuern des Schneidwerkzeugs (33) des sechsachsigen Gelenkroboters (30, 40, 50) durch Auswahl eines geeigneten Bedienprogramms über das Programmauswahlmittel (83) auf Basis des Ergebnisses der Erkennung eines rechten oder linken Teilstücks (1) und einer Länge des Teilstücks und zum Senden eines Steuersignals auf Basis des ausgewählten Bedienprogramms von der Steuerung (80) an den sechsachsigen Gelenkroboter (30) bedienbar ist.

7. Vorrichtung zum Entbeinen eines Beinteils eines Schweins mit entferntem Hüftknochen (4) nach Anspruch 6, wobei die Vorrichtung Folgendes umfasst:
ein Verfahrmittel zum Verfahren der Einspannvorrichtungen, die jeweils das Schweinebeinteil zum Aufhängen an dessen Knöchel (8) einspannen,
eine Vielzahl von Einschneidemitteln zum Ausführen von Schnitten im Fleischteil des Schweinebeinteils entlang dessen Unterschenkelknochen (2) und Oberschenkelknochen (3) in Längsrichtung;
ein erstes Fleischabstreifmittel zum Abstreifen von die Unterschenkelknochen (2) umgebendem Fleisch beim Transportieren des Schweinebeinteils, umfassend einen Einfügevorsprungsabschnitt, der in die Lücke zwischen einem Schienbein und einem Wadenbein, welche die Unterschenkelknochen (2) bilden, eintritt, wenn das transportierte Schweinebeinteil auf dem Einfügevorsprungsabschnitt auftrifft, eine erste Abstreiferplatte, die dem transportierten Schweinebeinteil nachgeordnet angeordnet ist und das Unterschenkelfleisch niederhält, wenn das Schweinebeinteil unter die erste Abstreiferplatte gelangt, und
eine Schwenkabstreiferplatte (62), die das Wadenfleisch niederhält, wenn das Schweinebeinteil unter diese Abstreiferplatten gelangt;
ein zweites Fleischabstreifermittel zum Abstreifen von den Oberschenkelknochen (3) umgebendem Fleisch beim weiteren Transport des Schweinebeinteils, umfassend
eine zweite Abstreiferplatte, die dem transportierten Schweinebeinteil, dessen die Unterschenkelknochen (2) umgebendes Fleisch durch das erste Abstreifermittel abgestreift wird, nachgeordnet angeordnet ist, wobei die zweite Abstreiferplatte in der Richtung der Transportrichtung nach unten geneigt ist und einen konkaven Abschnitt aufweist, der entgegen der Transportrichtung offen ist und derart geformt ist, dass das Kniegelenk (5) und der Oberschenkelknochen (3) durch den konkaven Abschnitt hindurchtreten können, und
eine Schneidevorrichtung, die biologisches Gewebe um den Oberschenkelknochen (3) schneidet, während das Schenkelfleisch von dem Oberschenkelknochen abgestreift wird, und am Ende des Fleischabstreifens das Fleisch von dem Hüftkopf (3a) abschneidet;
wobei das die Unterschenkelknochen (2) umgebende Fleisch abgestreift wird, indem die Einspannvorrichtung verfahren wird, um eine Beaufschlagung des Fleischs mit einer entgegen der Transportrichtung schräg nach unten gerichteten Abstreifkraft durch die erste Abstreiferplatte zu ermöglichen, wobei das den Oberschenkelknochen umgebende Fleisch abgestreift wird, indem die Einspannvorrichtung weiter verfahren wird, um eine Beaufschlagung des Fleischs mit einer entgegen der Transportrichtung schräg nach unten gerichteten Abstreifkraft durch die zweite Abstreiferplatte zu ermöglichen, und das von den Unterschenkelknochen und dem Oberschenkelknochen abgestreifte Fleisch durch die Schneideeinrichtung von dem Hüftkopf abgeschnitten wird.

8. Entbeinvorrichtung nach Anspruch 7, wobei das Einschneidemittel Folgendes umfasst:
ein erstes Einschneidemittel zum Ausführen eines Schnitts, derart, dass die Spitze einer Schneideeinrichtung ausgehend von dem oberen Teil des Kniegelenkabschnitts (5) des Schweinebeins in das Fleisch eintritt und an der Oberfläche des Oberschenkelknochens (3) entlangfährt und der mittlere Abschnitt der Schneideeinrichtung an einer Membran zwischen dem Innenschenkelfleisch und der Unterschale bis zum hüftkopfseitigen (3a) Ende des Oberschenkelknochens (3) entlangfährt, ein zweites Einschneidemittel zum Ausführen eines Schnitts von dem oberen Teil der Unterschenkelknochen (2) entlang der Unterschenkelknochen bis zum unteren Teil des Kniegelenks (5); und
ein drittes Einschneidemittel zum Ausführen eines Schnitts, derart, dass die Spitze der Schneideeinrichtung in das Wadenfleisch eintritt und an der Kniescheibe vorbei bis unter den Gelenkabschnitt fahrt.

9. Entbeinvorrichtung nach Anspruch 7, wobei das Unterscheidungsmittel (81) zum Unterscheiden, ob es sich bei dem Schweinebeinteil um ein rechtes Bein oder ein linkes Bein handelt, und zum gleichzeitigen Erkennen einer Länge des Schweinebeinteils dem Einschneidemittel vorgeschaltet ist, wobei das Unterscheidungsmittel (81) eine Platte aufweist, die um eine Schwenkachse (62a) schwenkbar ist und schwenkt, wenn sie an dem Hüftkopf (3a) des von der Einspannvorrichtung hängenden Schweinebeinteils zur Anlage kommt, wobei die Platte von unten in Richtung des Schweinebeinteils nach oben bewegt wird, bis die Platte derart an dem Hüftkopf (3a) zur Anlage kommt, dass sich die Schwenkachse (62a) auf der vertikalen Mittellinie des aufgehängten Schweinebeinteils bewegt, wobei eine Unterscheidung eines rechten oder linken Schweinebeinteils durch Erkennen einer Neigungsrichtung der Platte bei Anlage an dem Hüftkopf (3a) erfolgt, und wobei die Länge des Schweinebeinteils durch Erkennen der Hebestrecke der Platte bei Anlage der Platte an dem Hüftkopf (3a) und durch Berechnen der Länge des Schweinebeins auf Basis der erkannten Strecke erkannt wird.

10. Entbeinvorrichtung nach Anspruch 7, wobei das Unterscheidungsmittel (81, 110) zum Unterscheiden, ob es sich bei dem Schweinebeinteil um ein rechtes Bein oder linkes Bein handelt, dem Einschneidemittel vorgeschaltet ist, wobei das Unterscheidungsmittel Folgendes umfasst:
zwei Paar Messarme (111, 112), die jeweils so angeordnet sind, dass sie das Oberschenkelfleisch des am von einer Einspannvorrichtung eingespannten Knöchel hängenden Schweinebeins einfassen können, so dass dessen Fettschicht stets in eine festgelegte Richtung weist,
ein Messarmantriebsmittel, das für jedes der Paare von Messarmen (111, 112) zur Bewegung der Arme vorgesehen ist, um die Entfernung zwischen den Armen des jeweiligen Paars von Messarmen zu verändern, und
ein Beurteilungsmittel (119) zum Beurteilen, ob es sich bei dem Schweinebeinteil um ein rechtes Beinteil oder ein linkes Beinteil handelt;
wobei das Beurteilungsmittel (119) die Entfernung zwischen den Armen des jeweiligen Paars von Messarmen (111, 112) erkennt, die erkannten Entfernungen vergleicht und anhand des Ergebnisses des Vergleichs beurteilt, ob es sich bei dem Schweinebeinteil um ein rechtes oder ein linkes Beinteil handelt.

11. Entbeinvorrichtung nach Anspruch 10, wobei das Längenerkennungsmittel (130) zum Erkennen der Länge des Schweinebeinteils dem Einschneidemittel vorgeschaltet ist, wobei das Längenerkennungsmittel (130) Folgendes umfasst:
einen Basisbügel (131), der von unterhalb des transportierten Schweinebeinteils,
das mit seinem Knöchel (8) in der Einspannvorrichtung eingespannt und aufgehängt ist, so dass seine Fettschicht immer in eine festgelegte Richtung weist, nach oben und auf das Schweinebeinteil zu bewegt wird, während er mit der gleichen Geschwindigkeit und in die gleiche Richtung wie die Einspannvorrichtung verfahren wird,
einen Erkennungsarm (132), der von dem Basisbügel schwenkbar gehaltert wird, so dass der Erkennungsarm (132) bei Anlage an dem Hüftkopf (3a) des Schweinebeinteils nach unten schwenkt,
einen Annäherungsschalter (134) zum Erkennen einer Annäherung oder einer Anlage des Erkennungsarms (132) an den Annäherungsschalter (134), und
einen Schieberarm (137), der oberhalb des Erkennungsarms (132) von dem Basisbügel (131) schwenkbar gehaltert ist und sich in Richtung des Schweinebeinteils erstreckt und der zunächst an dem unteren Teil des Oberschenkelfleischs des Schweinebeinteils zur Anlage kommt, um das Oberschenkelfleisch wegzuschieben,
wenn sich der Basisbügel (131) dem Oberschenkelfleisch nähert und unter Beaufschlagung mit einer Reaktionskraft durch das Oberschenkelfleisch nach unten schwingt,
wobei die Hebestrecke des Basisbügels (131) bei Annäherung oder Anlage des Erkennungsarms (132) an den Annäherungsschalter (134) erkannt und die Länge des Schweinebeinteils auf Basis der erkannten Strecke berechnet wird.

12. Entbeinvorrichtung nach einem der Ansprüche 9 bis 11, wobei das Einschneidemittel eine Vielzahl von Programmen, in denen jeweils eine Bewegung einer Schneideeinrichtung (35) zum Einschneiden entsprechend einem rechten oder linken Schweinebeinteil und einer Länge des Schweinebeinteils voreingestellt ist, ein Auswahlmittel (83) zum Auswählen eines einem zu bearbeitenden Schweinebeinteil am geeignetsten entsprechenden Programms aus der Vielzahl von Programmen (82) auf Basis des Ergebnisses der Erkennung eines rechten oder linken Schweinebeinteils und einer Länge des Schweinebeinteils, und ein Schneideeinrichtungsantriebsmittel zum Betätigen der Schneideeinrichtung gemäß dem ausgewählten Programm umfasst.

13. Entbeinvorrichtung nach Anspruch 9 oder 10, wobei ein Fleischabstreifmittel für ein rechtes Beinteil und ein Fleischabstreifmittel für ein linkes Beinteil, die einander gegenüberliegend angeordnet sind, wobei der Verfahrweg der Einspannvorrichtung zwischen den beiden Abstreifmitteln hindurchführt, und
ein Beurteilungsmittel (119) zum Beurteilen, ob das erste oder das zweite Fleischabstreifmittel einzusetzen ist, vorgesehen sind.

14. Entbeinvorrichtung nach Anspruch 7, wobei das Verfahrmittel ein durchgängiges Verfahrmittel zum Verfahren der das Schweinebeinteil aufhängenden Einspannvorrichtung mit einer konstanten Verfahrgeschwindigkeit vorbei an einem Teilstücklängenerkennungsmittel (130), dem Einschneidemittel, dem ersten Fleischabstreifmittel zum Abstreifen von Fleisch von den Unterschenkelknochen (2) und dem zweiten Fleischabstreifmittel zum Abstreifen von Fleisch von den Oberschenkelknochen (3) ist; und
wobei das Unterscheidungsmittel (81, 110) zum Unterscheiden, ob es sich bei dem zu bearbeitenden Schweinebeinteil um ein rechtes oder ein linkes Beinteil handelt, vorgesehen ist, um die Unterscheidung vorzunehmen, bevor das Schweinebeinteil von der Einspannvorrichtung eingespannt wird, und wobei eine Teilstückzuführvorrichtung vorgesehen ist, die dazu dient, das Schweinebeinteil in einem aufgehängten Zustand dem Unterscheidungsmittel zuzuführen, wo die Unterscheidung stattfindet, und es dann einer Teilstückbewegungsführung (122) zum Führen des Schweinebeinteils von der Teilstückzuführvorrichtung zu der transportierenden Einspannvorrichtung zuzuführen, wobei die Teilstückbewegungsführung (122) zwischen dem Verfahrweg der Einspannvorrichtung und der Teilstückzuführvorrichtung vorgesehen ist und in der gleichen Richtung und mit der gleichen Geschwindigkeit wie die Einspannvorrichtung für einen festgelegten Zeitraum oder Abschnitt synchron zum Verfahren der Einspannvorrichtung bewegt werden kann, und wobei ein Schieber zum Schieben des von der Schieberführung hängenden Schweinebeinteils zur Einspannvorrichtung vorgesehen ist.

## Revendications

1. Procédé pour désosser une pièce (1) étant une partie de jambe de derrière d'un porc abattu, son os iliaque (4) enlevé, le procédé comprenant :
un processus d'incision (ST3, ST4, ST5) pour faire une incision le long des os de la pièce (1), y compris une partie d'articulation du genou (5), dans la direction longitudinale des os pendant que la pièce (1) est transférée dans un état suspendu à un dispositif de serrage avec sa cheville (8) étant serrée par le dispositif de serrage,
un processus de positionnement pour positionner la partie de cheville de la pièce (1) en cours de transfert avec la cheville (8) étant serrée par le dispositif de serrage en permettant à une partie de la partie de cheville juste au-dessous du dispositif de serrage de s'introduire dans une partie concave (72) d'une plaque de racloir (61, 71, 161) située en aval de la pièce (1) en cours de transfert de telle façon qu'elle soit inclinée vers le bas vers la direction de transfert (a) du dispositif de serrage, la partie concave (72) étant formée de telle façon que les os de la pièce (1) puissent la traverser, et
un processus de raclage de viande pour racler la viande entourant les os en transférant le dispositif de serrage, dans lequel la viande est retenue par la plaque de racloir (61, 71, 161) et reçoit une force de raclage inclinée vers le bas vers l'amont de la direction de transfert (a) par la plaque de racloir (61, 71, 161), la viande étant ainsi raclée des os pendant que le dispositif de serrage est transféré,
**caractérisé en ce qu'**
un processus de discrimination est effectué utilisant un moyen de discrimination (81, 110) afin de discriminer si la pièce (1) est une pièce droite ou gauche,
un processus de détection de longueur est effectué utilisant un moyen de détection de longueur de pièce (130) afin de détecter la longueur de la pièce (1), et
le processus d'incision (ST3, ST4, ST5) comprend
contrôler le mouvement d'un couteau (35) d'un outil de coupe (33) étant attachée à une partie d'extrémité (31a) d'un bras robotique (31) d'un robot (30) multiarticulé à six axes en sélectionnant un programme d'opération approprié d'une pluralité de programmes d'opération (82) étant prévus dans un contrôleur (80) par un moyen de sélection de programme (83) sur la base du résultat de détection de la pièce gauche ou droite et de la longueur de la pièce (1) et transmettre un signal de contrôle sur la base du programme d'opération sélectionné à partir du contrôleur (80) au robot (30) multiarticulé à six axes, chacun de la pluralité de programmes d'opération (82) définissant le mouvement du couteau (35) de sorte qu'il correspond à la pièce droite ou gauche et à la longueur de la pièce (1).

2. Procédé pour désosser une partie de jambe d'un porc avec sa hanche enlevée selon la revendication 1, dans lequel le procédé comprend :
un processus d'incision pour faire une incision dans la partie de viande de la jambe de porc le long les os de la jambe inférieure (2) et le fémur (3) de la partie de jambe de porc dans la direction longitudinale des os pendant que la partie de jambe de porc est transférée dans un état suspendu au dispositif de serrage avec sa cheville (8) serrée par le dispositif de serrage,
un premier processus de positionnement pour positionner la partie de cheville de la partie de jambe de porc en cours de transfert avec la cheville (8) serrée par le dispositif de serrage en permettant à une partie de la partie de cheville juste au-dessous du dispositif de serrage à percuter contre une première plaque de racloir située en aval de la partie de jambe de porc en cours de transfert de telle façon qu'une partie saillante d'insertion (61a) de la première plaque de racloir es insérée entre un tibia (2a) et une fibule (2b) composant les os de la jambe inférieure (2), par quoi la viande de jarret peut se positionner juste au-dessous de la première plaque de racloir (61) et la viande de mollet est retenue par une plaque de racloir pivotante (62) attachée d'une manière pivotante à la plaque de racloir,
un premier processus de raclage de viande pour racler la viande entourant les os de la jambe inférieure (2) en transférant le dispositif de serrage dans un état dans lequel la viande entourant les os de la jambe inférieure (2) est retenue par la première plaque de racloir principale et la plaque de racloir pivotante (62), par quoi la viande reçoit une force de raclage inclinée vers le bas vers l'amont de la direction de transfert (a) par la première plaque de racloir principale et la plaque de racloir pivotante (62) afin d'être raclée des os de la jambe inférieure (2) pendant que le dispositif de serrage est transféré,
un deuxième processus de positionnement pour positionner la jambe de porc avec la viande raclée des os de la jambe inférieure (2) restant en transférant la partie de jambe de porc dans un état suspendu au dispositif de serrage et en permettant à l'articulation du genou (5) parmi la partie de jambe de porc à s'introduire dans une partie concave d'une deuxième plaque de racloir inclinée vers le bas vers l'aval de la direction de transfert (a), la partie concave étant ouverte vers l'amont de la direction de transfert et étant formée de telle façon que l'articulation du genou (5) et le fémur (3) puissent la traverser,
un deuxième processus de racloir de viande pour racler la viande entourant le fémur (3) en transférant le dispositif de serrage dans un état dans lequel la viande est retenue par la deuxième plaque de racloir, par quoi la viande reçoit une force de raclage inclinée vers le bas vers l'amont de la direction de transfert (a) par la deuxième plaque de racloir afin d'être raclée du fémur (3) pendant que le dispositif de serrage est transféré plus loin, et
un processus de séparation final pour séparer la viande de la tête fémorale (3a) du fémur (3).

3. Procédé de désossement selon la revendication 2, dans lequel le processus d'incision comprend :
un premier processus d'incision pour faire une incision de telle façon que la pointe du couteau (35) entre dans la viande à partir de la partie supérieure de la partie d'articulation du genou (5) de la jambe de porc et se déplace le long la surface du fémur (3) et la partie centrale du couteau (35) se déplace le long une membrane entre la viande de l'intérieur de la cuisse et la viande de la partie postérieure de la cuisse jusqu'au l'extrémité de la tête fémorale (3a),
un deuxième processus d'incision pour faire une incision à partir de la partie supérieure des os de la jambe inférieure le long les os de la jambe inférieure (2) jusqu'à la partie inférieure de l'articulation du genou (5) ; et
un troisième processus d'incision pour faire une incision de telle façon que la pointe du couteau (35) entre dans la viande du mollet et se déplace en passant devant la rotule jusqu'au dessous de la partie d'articulation (5) ;
permettant ainsi le raclage souple de la viande et prévenant l'obstruction de la viande à la partie de pincement de la plaque de racloir de viande quand la viande est raclée dans un étant dans lequel la rotule est sur le côté en amont du fémur.

4. Procédé de désossement selon la revendication 2, dans lequel la partie de jambe de porc est serrée par le dispositif de serrage et y suspendue de telle façon que la couche de graisse (1a) de la partie de jambe de porc soit toujours orientée vers une direction déterminée, une plaque pivotant sur un axe pivotant (62a) est soulevée par en dessous de la partie de jambe de porc suspendue jusqu'à ce que la plaque vienne en contact avec la tête fémorale (3a) de la partie de jambe de porc de telle façon que l'axe pivotant (62a) soit sur une ligne centrale de la jambe de porc suspendue, dans lequel on détecte si la jambe de porc est une jambe droite ou une jambe gauche en détectant une direction d'inclinaison de la plaque au contact avec la tête fémorale (3a) ; et une distance de levage de la plaque est détectée quand la plaque vient en contact avec la tête fémorale (3a) et une longueur de la partie de jambe de porc est calculée sur la base de la distance de levage détectée.

5. Procédé de désossement selon la revendication 4, dans lequel une pluralité de programmes (82) est prévue dans chacun desquels un mouvement d'un couteau (35) pour faire une incision est prédéfini afin de correspondre au droit ou à la gauche et à la longueur de la partie de jambe de porc, un programme qui correspond de la manière la plus appropriée à une partie de jambe de porc à traiter étant sélectionné parmi la pluralité de programmes sur la base du résultat de la détection d'une partie droit ou d'une partie gauche et de la longueur de la partie de jambe de porc, et le couteau (35) étant manipulé selon le programme sélectionné.

6. Dispositif de désossement pour désosser une pièce (1) étant une partie de jambe de derrière d'un porc abattu, son os iliaque (4) enlevé, comprenant :
un dispositif de serrage pour serrer et suspendre la pièce (1),
un dispositif de transfert pour transférer horizontalement le dispositif de serrage,
un dispositif d'incision (32) pour faire une incision dans la viande le long des surfaces des os de la pièce (1) dans la direction longitudinale des os, et
une plaque de racloir (61) qui a une partie concave (72) formée de telle façon que les os de la pièce (1) puissent la traverser et étant située en aval de la partie de jambe de porc en cours de transfert de telle façon qu'elle soit inclinée vers le bas vers la direction de transfert (a) du dispositif de serrage, dans lequel la pièce (1) est transférée dans un état dans lequel une partie de la partie de cheville juste au-dessous du dispositif de serrage s'est introduite dans la partie concave (72) de la plaque de racloir (61), la viande qui adhère aux os étant ainsi retenue par la plaque de racloir et recevant une force de raclage inclinée vers le bas vers l'amont de la direction de transfert (a) par la plaque de racloir (61) afin d'être raclée des os pendant que le dispositif de serrage est transféré,
**caractérisé en ce qu'**
un moyen de discrimination (81, 110) est prévu qui est apte à effectuer un processus de discrimination afin de discriminer si la pièce est une pièce droite ou gauche, et
le dispositif d'incision (32) comprend une pluralité de robots (30, 40, 50) multiarticulés à six axes, chacun ayant un bras robotique (31) et un outil de coupage (33) comprenant un couteau (35) étant attaché à une partie d'extrémité (31a) du bras robotique (31),
et un moyen de détection de longueur de pièce (130) est prévu qui est apte à effectuer une détection de la longueur de la pièce (1),
et un contrôleur (80) comprenant un moyen de sélection de programme (83) et une pluralité de programmes d'opération (82) dont chacun définit le mouvement du couteau de sorte qu'il correspond à la pièce droite ou gauche et à la longueur de la pièce (1), dans lequel le contrôleur est connecté à chaque robot (30) multiarticulé à six axes et est opérable à contrôler l'outil de coupage (33) du robot (30, 40, 50) multiarticulé à six axes en sélectionnant un programme d'opération approprié par le moyen de sélection de programme (83) sur la base du résultat de la détection de la pièce droite ou gauche et de la longueur de la pièce (1) et transmettant un signal de contrôle sur la base du programme d'opération sélectionne à partir du contrôleur (80) au robot (30) multiarticulé à six axes.

7. Dispositif pour désosser une partie de jambe d'un porc avec sa hanche enlevée selon la revendication 6, dans lequel le dispositif comprend :
un moyen de transfert pour transférer des dispositifs de serrage dont chacun serre la partie de jambe de porc à sa cheville (8) pour la suspendre,
une pluralité de moyens d'incision pour faire une incision dans la partie de viande de la partie de jambe de porc le long ses os de la jambe inférieure (2) et le fémur (3) dans la direction longitudinale ;
un premier moyen de racloir de viande pour racler la viande entourant les os de la jambe inférieure (2) pendant que la partie de jambe de porc est transférée, comprenant
un partie saillante d'insertion qui entre dans l'espace entre un tibia et une fibule composant les os de la jambe inférieure (2) quand la partie de jambe de porc en cours de transfert percute contre la partie saillante d'insertion,
une première plaque de racloir qui est située en aval de la partie de jambe de porc transférée et retient la viande de jarret quand la partie de jambe de porc vient sous la première plaque de racloir, et
une plaque de racloir pivotante (62) qui retient la viande de mollet quand la partie de jambe de porc vient sous lesdites plaques de racloir ;
un deuxième moyens de racloir de viande pour racler la viande entourant la fémur (3) pendant que la partie de jambe de porc est transférée plus loin, comprenant une deuxième plaque de racloir qui est située en aval de la partie de jambe de porc transférée dont la viande entourant les os de la jambe inférieure (2) est raclée par les premiers moyens de racloir, la deuxième plaque de racloir étant inclinée vers le bas vers l'aval de la direction de transfert et ayant une partie concave qui est ouverte vers l'amont de la direction de transfert et étant formée de telle façon que l'articulation du genou (5) et le fémur (3) puissent traverser la partie concave, et
un dispositif de coupage qui coupe des tissus biologiques autour du fémur (3) dans le processus de raclage de la viande de cuisse du fémur et sépare la viande de la tête fémorale (3a) au fin du raclage de viande ;
dans lequel la viande entourant les os de la jambe inférieure (2) est raclée en transférant le dispositif de serrage afin de permettre à la viande de recevoir une force de raclage inclinée vers le bas vers l'amont de la direction de transfert par la première plaque de racloir, la viande entourant le fémur est raclée en transférant plus loin le dispositif de serrage afin de permettre à la viande de recevoir une force de raclage inclinée vers le bas vers l'amont de la direction de transfert par la deuxième plaque de raclage, et la viande raclée des os de la jambe inférieure et du fémur est séparée de la tête fémorale par le couteau.

8. Dispositif de désossement selon la revendication 7, dans lequel le moyen d'incision comprend :
un premier moyen d'incision pour faire une incision de telle façon que la pointe d'un couteau entre dans la viande à partir de la partie supérieure de la partie d'articulation du genou (5) de la jambe de porc et se déplace le long la surface du fémur (3) et la partie centrale du couteau se déplace le long une membrane entre la viande de l'intérieur de la cuisse et la viande de la partie postérieure de la cuisse jusqu'au l'extrémité du fémur (3) de côté de la tête fémorale (3a),
un deuxième moyen d'incision pour faire une incision à partir de la partie supérieure des os de la jambe inférieure (2) le long le fémur jusqu'à la partie inférieure de l'articulation du genou (5) ; et
un troisième moyen d'incision pour faire une incision de telle façon que la pointe du couteau entre dans la viande de mollet et se déplace en passant devant la rotule jusqu'au dessous de la partie d'articulation.

9. Dispositif de désossement selon la revendication 7, dans lequel le moyen de discrimination (81) pour discriminer si la partie de jambe de porc est une jambe droite ou une jambe gauche et parallèlement pour détecter la longueur de la partie de jambe de porc est prévu en amont du moyen d'incision, le moyen de discrimination (81) ayant une plaque qui peut être pivotée sur un axe de pivotement (62a) et qui pivot quand elle vient en contact avec la tête fémorale (3a) de la partie de jambe de porc suspendu au dispositif de serrage, par quoi la plaque est soulevée vers la partie de jambe de porc par en dessous jusqu'à ce que la plaque vienne en contact avec la tête fémorale (3a) de telle façon que l'axe de pivotement (62a) se déplace sur la ligne centrale verticale de la partie de jambe de porc suspendue, la discrimination si la partie de jambe de porc est une partie droite ou gauche est effectuée en détectant la direction d'inclinaison de la plaque au contact avec la tête fémorale (3a), et la longueur de la partie de jambe de porc es détectée en détectant la distance de levage de la plaque quand la plaque vient en contact avec la tête fémorale (3a) et calculant la longueur de la partie de jambe de porc sur la base de la distance détectée.

10. Dispositif de désossement selon la revendication 7, dans lequel le moyen de discrimination (81, 110) pour discriminer si la partie de jambe de porc est une jambe droite ou une jambe gauche est prévu en amont du moyen d'incision, le moyen de discrimination comprenant :
deux paires de bras de mesure (111, 112) dont chacune est prévue à une position capable de pincer la viande de cuisse de la partie de jambe de porc suspendue avec sa cheville serrée par un dispositif de serrage de telle façon que sa couche de graisse soit toujours orientée dans une direction déterminée,
un moyen d'entraînement de bras de mesure prévu pour chaque paire de bras de mesure (111, 112) pour déplacer les bras afin de varier une distance entre les bras de chaque paire de bras de mesure et
un moyen d'appréciation (119) pour apprécier si la partie de jambe de porc est une partie de jambe droite ou une partie de jambe gauche ;
dans lequel le moyen d'appréciation (119) détecte la distance entre les bras de chaque paire de bras de mesure (111, 112), compare les distance détectées et apprécie si la partie de jambe de porc est une partie de jambe droite ou gauche sur la base du résultat de la comparaison.

11. Dispositif de désossement selon la revendication 10, dans lequel ledit moyen de détection de longueur (130) pour détecter la longueur de la partie de jambe de porc est prévu en amont du moyen d'incision, le moyen de détection de longueur (130) comprenant :
un étrier de base (131) qui est soulevé par en dessous de la partie de jambe de porc en cours de transfert étant serrée avec sa cheville (8) serrée par le dispositif de serrage et suspendue de telle façon que sa couche de graisse soit toujours orientée dans une direction déterminée avancée vers la partie de jambe de porc pendant être transférée à la même vitesse et dans la même direction que le dispositif de serrage,
un bras de détection (132) supporté de manière pivotable par l'étrier de base de telle façon que le bras de détection (132) pivote vers le bas au contact avec la tête fémorale (3a) de la partie de jambe de porc,
un capteur de proximité (134) pour détecter la proximité ou le contact du bras de détection (132) au capteur de proximité (134), et
un bras de poussoir (137) qui est supporté de manière pivotable au-dessus du bras de détection (132) par l'étrier de base (131) et s'étend vers la partie de jambe de porc, et qui vient au contact avec la partie inférieure de la viande de cuisse de la partie de jambe de porc premièrement pour repousser la viande de cuisse quand l'étrier de base (131) s'approche de la viande de cuisse et pivot vers le bas en recevant une force de réaction de la viande de cuisse,
dans lequel la distance de levage de l'étrier de base (131) quand le bras de détection (132) est proche de ou vient en contact avec le capteur de proximité (134) est détectée et la longueur de la partie de jambe de porc est calculée sur la base de la distance détectée.

12. Dispositif de désossement selon l'une quelconque des revendications 9 à 11, dans lequel ledit moyen d'incision comprend une pluralité de programmes dans chacun desquels un mouvement d'un couteau (35) pour faire une incision est prédéfini afin de correspondre à une partie droite ou une partie gauche et une longueur de la partie de jambe de porc, un moyen de sélection (83) pour sélectionner un programme qui correspond d'une manière la plus appropriée à une partie de jambe de porc à traiter parmi la pluralité de programmes (82) sur la base du résultat de la détection d'une partie droite ou gauche et de la longueur de la partie de jambe de porc, et un moyen d'entraînement de couteau pour manipuler le couteau selon le programme sélectionné.

13. Dispositif de désossement selon les revendications 9 ou 10, dans lequel des moyens de racloir de viande pour une partie de jambe droite et pour une partie de jambe gauche sont située afin de faire face l'un à l'autre, la trajectoire de transfert du dispositif de serrage passant entre les deux moyens de racloir, et
un dispositif d'appréciation (119) est prévu pour apprécier si le premier ou le deuxième moyen de racloir de viande doit être utilisé.

14. Dispositif de désossement selon la revendication 7, dans lequel le moyen de transfert est un dispositif de transfert continu pour transférer le dispositif de serrage suspendant la partie de jambe de porc à une vitesse de transfert constante en passant devant un moyen de détection de longueur de pièce (130), le moyen d'incision, le premier moyen de racloir de viande pour racler la viande des os de la jambe inférieure (2) et le deuxième moyen de racloir de viande pour racler la viande des fémurs (3), et
le moyen de discrimination (81, 110) est prévu pour discriminer si la partie de jambe de porc à traiter est une partie de jambe droite ou une partie de jambe gauche afin d'effectuer la discrimination avant que la partie de jambe de porc soit serrée par le dispositif de serrage, et un dispositif d'amenée de pièce est prévu pour amener la partie de jambe de porc dans l'état suspendu au dispositif de discrimination ou ladite discrimination est effectuée et puis l'amener à un guidage de changement de pièce (122) pour guider la partie de jambe de porc à partir du dispositif d'amenée de pièce au dispositif de serrage transférant, le guidage de changement de pièce (122) étant prévu entre la trajectoire de transfert du dispositif de serrage et le dispositif d'amenée de pièce et pouvant être déplacé dans la même direction et à la même vitesse que le dispositif de serrage en synchronisme avec le transfert du dispositif de serrage pour une intervalle ou une section prédéterminée, et un pousseur est prévu pour pousser la partie de jambe de porc suspendue à partir du guidage de pousseur au dispositif de serrage.
